(19) Europäisches Patentamt

European Patent Office

Office européen des brevets

(11) **EP 0 841 759 B1**

(12) **FASCICULE DE BREVET EUROPEEN**

(45) Date de publication et mention
de la délivrance du brevet:
**26.01.2005 Bulletin 2005/04**

(51) Int Cl.⁷: **H04B 7/04**

(21) Numéro de dépôt: **97402659.3**

(22) Date de dépôt: **06.11.1997**

(54) **Procédé de calibration d'émission d'une station de base équipée d'une antenne à plusieurs capteurs**

Eichungsverfahren für Basisstationssendungen ausgerüstet mit einer Mehrelementantenne

Calibration method of base station transmission equipped with a multi-element antenna

(84) Etats contractants désignés:
**DE ES GB IT**

(30) Priorité: **07.11.1996 FR 9613597**

(43) Date de publication de la demande:
**13.05.1998 Bulletin 1998/20**

(73) Titulaire: **FRANCE TELECOM**
**75015 Paris (FR)**

(72) Inventeurs:
• **Aste, Thierry**
**69300 Caluire (FR)**
• **Fety, Luc**
**94120 Fontenay Sous Bois (FR)**
• **Forster, Philippe**
**93600 Aulnay Sous Bois (FR)**
• **Mayrargue, Sylvie**
**75013 Paris (FR)**

(74) Mandataire: **Fréchède, Michel et al**
**Cabinet Plasseraud**
**84, rue d'Amsterdam**
**75440 Paris Cédex 09 (FR)**

(56) Documents cités:
EP-A- 0 639 035 US-A- 5 515 378
US-A- 5 546 090

**Description**

La présente invention concerne un procédé d'émission par une station de base équipée d'une antenne à plusieurs capteurs, ou antenne "multi-capteurs", vers un mobile.

Elle s'applique notamment au domaine des radiocommunications avec les mobiles, à un procédé de transmission d'un signal numérique entre une station de base et un mobile déterminé en présence de brouilleurs et de bruit de fond.

L'invention concerne plus particulièrement la transmission sur la voie dite descendante, c'est-à-dire l'émission d'un signal numérique provenant de la station de base, en direction du mobile. L'invention utilise pour cela des données obtenues à partir de la transmission sur la voie dite montante relative à la même station de base, c'est-à-dire à partir de signaux reçus par l'antenne multi-capteurs de cette station en provenance du mobile et des brouilleurs.

Dans toute la suite, "fréquence" signifie "fréquence porteuse", "antenne" signifie "antenne multi-capteurs de la station de base", "émission" et "réception" signifient respectivement "émission par l'antenne" et "réception par l'antenne" et "transmission" signifie "émission et/ou réception".

"Mobile utile" signifie "mobile auquel on applique le procédé selon la présente invention" et "brouilleur" signifie "tout élément qui apporte une contribution à la composante représentant le bruit dans le signal numérique transmis, à l'exclusion du bruit de fond". Par exemple, un mobile autre que le mobile utile peut constituer un brouilleur pour le mobile utile.

"Trame" signifie "suite d'échantillons consécutifs d'un signal, en nombre suffisant pour permettre le calcul des données statistiques requises" (ces données statistiques seront explicitées dans la suite).

Les radiocommunications avec les mobiles connaissent à l'heure actuelle une croissance telle qu'on cherche à augmenter le nombre d'utilisateurs d'un réseau donné de radiocommunications desservis simultanément. Pour cela, on cherche généralement à exploiter de façon optimale le spectre des fréquences d'émission et de réception disponibles.

Dans un réseau de radiocommunications de type cellulaire, on peut notamment permettre à plusieurs mobiles de communiquer simultanément en leur attribuant une même fréquence à l'intérieur d'une même cellule du réseau : c'est l'objet de la technique dite AMRS (Accès Multiple à Répartition Spatiale) (en anglais SDMA, Space Division Multiple Access).

Dans ce cas, on utilise généralement une antenne dont le diagramme de rayonnement présente au moins un lobe. L'antenne crée des minima d'énergie en réception et en émission vers les mobiles autres que le mobile utile qui partagent avec lui la même fréquence et qui constituent des brouilleurs pour ce mobile utile.

On connaît des procédés de traitement de signal appliqués à des antennes multi-capteurs qui permettent d'améliorer la réception en agissant sur la voie montante.

Cependant, les étapes et les paramètres mis en jeu dans les procédés connus dépendent généralement de la nature des canaux de propagation observés sur les différents capteurs de l'antenne. Or ces canaux sont eux-mêmes fonctions notamment de la fréquence porteuse. Lorsque la voie descendante utilise une fréquence différente de celle de la voie montante, on ne peut généralement pas réutiliser pour la voie descendante les pondérations calculées et appliquées aux signaux reçus par les différents capteurs pour la voie montante.

Dans un article intitulé "Adaptive transmitting antenna methods for multipath environments", Globecom'94, pages 425-429, D. GERLACH et A. PAULRAJ décrivent un procédé de filtrage spatial en émission appliqué à une antenne multi-capteurs. Ce procédé présente plusieurs limites et inconvénients.

Tout d'abord, il suppose qu'il n'y a pas d'interférence intersymbole, ce qui n'est pas nécessairement le cas en pratique.

De plus, pour avoir des informations sur la nature des canaux de propagation de la voie descendante, ce procédé antérieur nécessite un "retour" ou "feedback" de la part du mobile considéré, c'est-à-dire que la station de base transmet périodiquement des signaux test au mobile, qui les mesure et qui transmet en retour le résultat de la mesure à la station de base. La présence d'un délai entre le "feedback" et la réémission par la station de base impose une certaine stabilité temporelle des grandeurs mesurées. Le nombre de mesures à transmettre en "feedback" est d'autant plus grand que la nature des canaux de propagation change rapidement. Ainsi, la quantité de "feedback" nécessaire peut être extrêmement élevée. Même si on tente de la réduire, cette quantité de "feedback" limite nécessairement le débit d'information utile transmise.

La présente invention a pour objectif de s'affranchir des inconvénients précités.

Plus particulièrement, un objectif de la présente invention est d'améliorer l'émission en atténuant le niveau général de brouillage lors de la transmission, en renforçant l'influence relative de l'énergie émise par l'antenne vers le mobile utile, et en limitant l'influence relative de l'énergie émise par l'antenne vers les brouilleurs.

La présente invention trouve notamment deux applications à un réseau cellulaire de radiocommunications avec les mobiles. D'une part, en zone urbaine, l'invention permet d'augmenter le taux de réutilisation des fréquences sur l'ensemble des cellules, ce qui permet d'augmenter le nombre d'utilisateurs du réseau desservis simultanément, grâce à la baisse du niveau général de brouillage. D'autre part, l'invention permet d'augmenter la portée de l'antenne. Par conséquent, en zone rurale, l'invention permet de limiter le nombre de stations de base nécessaires à la couverture d'une région donnée.

Afin d'atteindre l'objectif mentionné précédemment, la présente invention propose un procédé d'émission d'un signal numérique composé de trames successives d'échantillons, par une station de base équipée d'une antenne à plusieurs capteurs vers un mobile déterminé en présence de brouilleurs et de bruit de fond, à l'aide d'au moins une fréquence porteuse de réception et au moins une fréquence porteuse d'émission, suivant lequel :

- préalablement à la transmission :

  (a) pour chaque fréquence porteuse de réception, on élabore une table de calibration en réception, représentative de la variation de contribution, suivant la direction de réception, des différents capteurs en réception à ladite fréquence porteuse de réception ;
  (b) pour chaque fréquence porteuse d'émission, on élabore une table de calibration en émission, représentative de la variation de contribution, suivant la direction d'émission, des différents capteurs en émission à ladite fréquence porteuse d'émission ;
  (c) on calcule au moins un opérateur de transposition en fréquence qui transforme approximativement une dite table de calibration en réception en une dite table de calibration en émission ou en réception ;

- puis, lors de la transmission :

  (d) on calcule des données statistiques à partir de plusieurs échantillons de plusieurs trames des signaux reçus par les différents capteurs en provenance du mobile et des brouilleurs ;
  (e) on calcule, pour ledit mobile, un jeu optimal de pondérations spatiales à partir desdites données statistiques, dudit ou desdits opérateurs de transposition en fréquence et d'un critère de renforcement du signal utile et d'atténuation des brouilleurs ;
  (f) on pondère les contributions audit signal numérique à émettre par chaque capteur respectivement par des pondérations obtenues à partir des pondérations spatiales dudit jeu optimal ;
  (g) on émet ledit signal numérique ainsi pondéré procédé dans lequel on met en oeuvre les caractéristiques additionnelles de la revendication 1 ou de la revendication 13. Le document US-A-5 515 378 décrit un procédé similaire duquel les procédés revendiqués diffèrent avant tout en le calcul d'opérateur de transposition en fréquence qui transforme approximativement une table de calibration en réception en une table de calibration en émission ou en réception.

D'autres caractéristiques et avantages de la présente invention apparaîtront à la lecture de la description qui suit de modes particuliers de réalisation donnés à titre d'exemples non limitatifs.

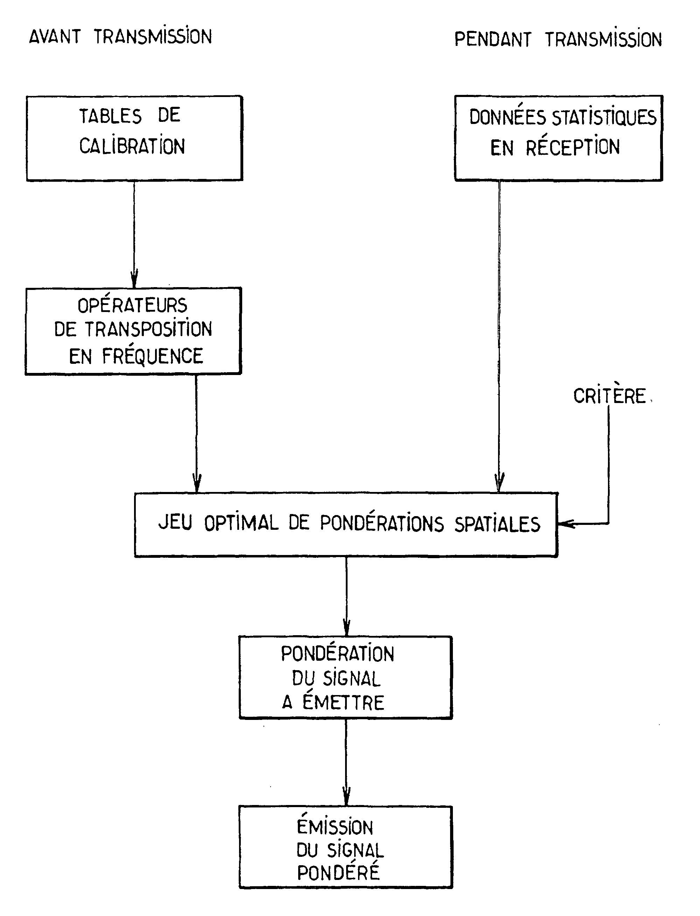

La description se réfère à la figure unique qui l'accompagne et qui est un organigramme reprenant les étapes successives du procédé selon la présente invention, dans un mode particulier de réalisation.

On considère dans la suite une station de base équipée d'une antenne ayant N capteurs.

On appelle "vecteur directionnel en réception" (respectivement, "vecteur directionnel en émission") un vecteur colonne à N composantes dont la $m^{\text{ème}}$ composante représente le signal qui serait reçu (respectivement, émis) par le $m^{\text{ème}}$ capteur, m variant de 1 à N, en cas de réception (respectivement, émission) d'une onde plane de fréquence donnée provenant d'une (respectivement, émise dans une) direction définie par un angle donné.

Comme mentionné en introduction, le procédé selon la présente invention utilise des données obtenues à partir de la transmission sur la voie montante, c'est-à-dire en réception. Ce qui suit concerne la voie montante.

On note $S_{\lambda r}(\alpha)$ le vecteur directionnel en réception relatif

- à la direction définie par l'angle $\alpha$, et
- à la longueur d'onde porteuse $\lambda = c/f$, où c désigne la vitesse de la lumière et f désigne la fréquence porteuse.

Par exemple, dans le cas d'une antenne linéaire à capteurs omnidirectionnels, de gain unité, équirépartis suivant un pas d, on a

$$S_\lambda(\alpha) = \begin{pmatrix} 1 \\ \exp(2\pi jd/\lambda\cos\alpha) \\ . \\ . \\ . \\ \exp(2\pi j(N-1)d/\lambda\cos\alpha) \end{pmatrix}$$

où exp désigne la fonction exponentielle et j désigne le nombre complexe vérifiant $j^2 = 1$.

Soit X(t) un vecteur colonne à N composantes dont la m$^{ème}$ composante représente le signal reçu à l'instant t en provenance des mobiles par le m$^{ème}$ capteur de l'antenne, pour m variant de 1 à N, ce signal étant ramené en bande de base.

On suppose que P mobiles émettent chacun un message $s_k(t)$ qui parvient à l'antenne par des trajets multiples de directions $\alpha_{k.i}$, de retards de propagation $\tau_{k.i}$ et d'amplitudes complexes $amp_{k.i}$ à la fréquence f = c/$\lambda$.

On a alors

$$X(t) = \sum_{k=1}^{P} \sum_{i} S_\lambda(\alpha_{k.i}) \cdot amp_{k.i} \cdot s_k(t - \tau_{k.i})$$

où i désigne l'indice des trajets affectés aux mobiles, où $amp_{k.i} = AMP_{k.i}.\exp(-2\pi jft_{k.i})$, où $AMP_{k.i}$ désigne le module de l'amplitude complexe $amp_{k.i}$ et où le terme $\exp(-2\pi jft_{k.i})$ provient du fait que le signal X(t) est en bande de base.

On voit que X(t) dépend de la fréquence par les vecteurs directionnels $S_\lambda(\alpha)$ et par les phases des amplitudes complexes $amp_{k.i}$ exclusivement.

Pour des modulations linéaires, chaque message $s_k(t)$ est de la forme

$$s_k(t) = \sum_{n} a_{k.n} \cdot h_k(t - nT)$$

où les coefficients $a_{k.n}$ représentent les symboles émis, les $h_k$ représentent les réponses impulsionnelles des filtres d'équipement d'émission-réception et T désigne la durée d'un symbole.

Notons X(t) = [$x_1(t)$, ..., $x_N(t)$]$^T$ où (.)$^T$ désigne la matrice transposée et où $x_m(t)$, pour m variant de 1 à N, désigne la m$^{ème}$ composante de X(t).

Pour m variant de 1 à N, on a alors

$$x_m(t) = \sum_{k=1}^{P} \sum_{n} a_{k.n} \cdot g_{k.m}(t - nT)$$

où $g_{k.m}$ désigne la réponse impulsionnelle de l'ensemble filtres d'équipment/canal de propagation à trajets multiples, entre le k$^{ème}$ mobile et le m$^{ème}$ capteur de l'antenne.

Lorsqu'on échantillonne les données, par exemple au rythme symbole 1/T dans un mode particulier de réalisation, on obtient, pour chaque instant d'échantillonnage $\ell$T, où $\ell$ est un entier,

$$x_m(\ell T) = \sum_{k=1}^{P} \sum_{n} a_{k,n} \cdot g_{k,m}((\ell-n) \cdot T)$$

$$= \sum_{k=1}^{P} \sum_{n} a_{k,\ell-n} \cdot g_{k,m}(nT)$$

$$= \sum_{k=1}^{P} \sum_{n} a_{k,\ell-n} \cdot g_{k,m,n}$$

On voit que les données reçues échantillonnées sur un capteur sont la somme des contributions des différents mobiles, chaque contribution étant une version filtrée, par un canal numérique, des symboles émis par les différents mobiles. Le nombre de termes dans une sommation sur n, diminué de 1, représente la longueur de l'interférence intersymbole relative au $k^{ème}$ mobile.

Notons $\check{R}_{xx} = X(t) \cdot X^+(t)$, où $(.)^+$ désigne la matrice transposée conjuguée et où t décrit un ensemble d'échantillons d'une trame du signal numérique.

Notons $R_{xx}$ la moyenne des matrices $\check{R}_{xx}$ sur un ensemble de M trames non nécessairement consécutives reçues par l'antenne, M étant suffisamment faible pour que les angles d'arrivée, sur les différents capteurs de l'antenne, des trajets multiples en provenance du mobile soient stables.

On montre aisément qu'en supposant que, pendant la période où on effectue la moyenne $R_{xx}$ des matrices $\check{R}_{xx}$,

(i) les caractéristiques angulaires de la propagation ne varient pas ;
(ii) les arguments des amplitudes complexes $amp_{k,i}$ varient de façon aléatoire dans l'intervalle $[0, 2\pi]$ ;
(iii) les modules des amplitudes complexes $amp_{k,i}$, c'est-à-dire l'énergie des trajets multiples, ne varient pas ;
(iv) les variations des retards des trajets multiples sont négligeables devant la durée T d'un symbole ;

alors la matrice moyenne $R_{xx}$ converge vers une matrice

$$E(X(\ell T) \cdot X^*(\ell T)) = \sum_{k=1}^{P} \sum_{i} S_\lambda(\alpha_{k,i}) \cdot A \cdot S_\lambda^*(\alpha_{k,i})$$

où $A = |amp_{k,i}|^2 \cdot |s_k(\ell T - \tau_{k,i})|^2$,
où $|\cdot|^2$ désigne le carré du module d'un nombre complexe, et où E désigne l'espérance mathématique.

La matrice $E(X(\ell T) \cdot X^+(\ell T))$ est indépendante des trames considérées. On considère que la matrice $R_{xx}$ en est une estimée.

On voit qu'effectuer la moyenne de $\check{R}_{xx}$ sur un nombre approprié de trames a pour conséquence de faire disparaître les termes de phase des amplitudes complexes $amp_{k,i}$ des trajets multiples. En supposant de plus que les puissances $|amp_{k,i}|^2$ des trajets multiples sont indépendantes de la fréquence, la matrice $R_{xx}$ ne dépend plus de la fréquence que par les vecteurs directionnels $S_\lambda(\alpha_{k,i})$. Cette propriété de la matrice $R_{xx}$, calculée à partir de plusieurs échantillons de plusieurs trames, permet de mettre en oeuvre les opérateurs de transposition en fréquence mentionnés plus haut et décrits plus en détail ci-après.

On appelle "table de calibration" l'ensemble des vecteurs directionnels relatifs à une géométrie d'antenne donnée.

Dans toute la suite, on considère un signal numérique composé de trames successives d'échantillons. Le procédé selon la présente invention consiste à émettre ce signal par une station de base équipée d'une antenne multi-capteurs vers un mobile utile, en présence de brouilleurs et de bruit de fond. On suppose que la voie montante utilise au moins une fréquence, dite fréquence porteuse de réception, et que la voie descendante utilise au moins une fréquence, dite fréquence porteuse d'émission.

Comme le montre la figure unique, préalablement à la transmission, on élabore des tables de calibration.

Pour chaque fréquence porteuse de réception, on élabore une table de calibration en réception, représentative de la variation de contribution, suivant la direction de réception, des différents capteurs en réception à ladite fréquence porteuse de réception.

Dans un mode particulier de réalisation, pour élaborer chaque table de calibration en réception, on forme une matrice où chaque colonne est un vecteur directionnel, dont la $m^{\text{ème}}$ composante représente le signal qui serait reçu par le $m^{\text{ème}}$ capteur, m variant de 1 à N, où N est le nombre de capteurs, en cas de réception d'une onde plane de fréquence égale à ladite fréquence porteuse et provenant d'une direction définie par un angle prédéterminé propre audit vecteur directionnel.

Pour chaque fréquence porteuse d'émission, on élabore une table de calibration en émission, représentative de la variation de contribution, suivant la direction d'émission, des différents capteurs en émission à ladite fréquence porteuse d'émission.

Dans un mode particulier de réalisation, pour élaborer chaque table de calibration en émission, on forme une matrice où chaque colonne est un vecteur directionnel, dont la $m^{\text{ème}}$ composante représente le signal qui serait émis par le $m^{\text{ème}}$ capteur, m variant de 1 à N, où N est le nombre de capteurs, en cas d'émission d'une onde plane de fréquence égale à ladite fréquence porteuse dans une direction définie par un angle prédéterminé propre audit vecteur directionnel.

Ensuite, on applique éventuellement à chaque élément des tables de calibration obtenues un facteur correctif respectif, afin de tenir compte de diverses caractéristiques des appareils compris dans la chaîne d'émission et dans la chaîne de réception. L'ensemble de ces facteurs correctifs peut être par la suite périodiquement remis à jour en fonction de l'évolution de plusieurs paramètres physiques mesurés.

L'étape suivante du procédé selon l'invention consiste, comme l'indique la figure, à calculer un ou plusieurs opérateurs matriciels linéaires, appelés opérateurs de transposition en fréquence. On montre en effet qu'il existe un opérateur linéaire qui transforme approximativement une table de calibration en réception en une table de calibration en émission ou en réception.

L'approximation utilisée peut être l'approximation des moindres carrés ou toute autre approximation appropriée.

Puis, lors de la transmission, comme le montre la figure, on calcule des données statistiques, sur la voie montante, à partir de plusieurs échantillons de plusieurs trames des signaux reçus par les différents capteurs en provenance du mobile et des brouilleurs.

Ces données statistiques sont avantageusement d'ordre 2. Cependant, elles peuvent être d'ordre supérieur.

Dans un premier mode particulier de réalisation mettant en oeuvre une unique fréquence porteuse de réception $f_1$ et une unique fréquence porteuse d'émission $f_2$, l'étape de calcul des opérateurs de transposition en fréquence consiste à calculer un unique opérateur matriciel de transposition en fréquence $T_{f1.f2}$ qui transforme la table de calibration en réception $C_1$ associée à la fréquence $f_1$ en la table de calibration en émission $C_2$ associée à la fréquence $f_2$.

Dans ce même mode particulier de réalisation, l'étape de calcul des données statistiques consiste, pour chaque trame d'un ensemble de M trames non nécessairement consécutives reçues par l'antenne, M étant suffisamment faible pour que les angles d'arrivée, sur les différents capteurs de l'antenne, des trajets multiples en provenance des mobiles soient stables :

- à calculer une matrice $\breve{R}_{xx}{}^{f1} = X_{f1}(t).X_{f1}{}^{+}(t)$,
  où $X_{f1}(t)$ est un vecteur à N composantes dont la $m^{\text{ème}}$ composante représente, à la fréquence porteuse $f_1$, le signal reçu à l'instant t en provenance des mobiles par le $m^{\text{ème}}$ capteur de l'antenne, pour m variant de 1 à N,
  où $(.)^{+}$ désigne la matrice transposée conjuguée, et
  où t décrit un ensemble d'échantillons de ladite trame, et
- à estimer une matrice $\breve{R}_{vv}{}^{f1}$, soit à partir des contributions des brouilleurs et du bruit de fond sur chacun des N capteurs de l'antenne, soit à partir du signal utile reçu par ces capteurs ;
  puis :
- à calculer la moyenne des M matrices $\breve{R}_{xx}{}^{f1}$, de façon à obtenir une matrice d'autocorrélation $R_{xx}{}^{f1}$, qui est une estimée de $E(X_{f1}(t).X_{f1}{}^{+}(t))$, où E désigne l'espérance mathématique, et
- à calculer la moyenne des M matrices $\breve{R}_{vv}{}^{f1}$, de façon à obtenir une matrice d'autocorrélation $R_{vv}{}^{f1}$, qui est une estimée de $E(V_{f1}(t).V_{f1}{}^{+}(t))$, où $V_{f1}(t)$ est un vecteur à N composantes dont la $m^{\text{ème}}$ composante représente, à la fréquence porteuse $f_1$, soit la contribution des brouilleurs et du bruit de fond sur le $m^{\text{ème}}$ capteur de l'antenne, soit le signal utile reçu par ce capteur, pour m variant de 1 à N.

Dans un second mode particulier de réalisation mettant en oeuvre plusieurs fréquences porteuses de réception $f_{qr}$ et plusieurs fréquences porteuses d'émission $f_{qe}$, chaque trame du signal numérique étant transmise à l'aide d'une fréquence porteuse différente, à une répétition périodique près, l'étape de calcul des tables de calibration consiste en outre à élaborer, pour une fréquence porteuse de réception $f_{q0r}$ choisie arbitrairement, une table de calibration en réception $C_{q0r}$, représentative de la variation de contribution, suivant la direction de réception, des différents capteurs en réception à la fréquence porteuse de réception $f_{q0r}$.

Dans ce second mode particulier de réalisation, l'étape de calcul des opérateurs de transposition en fréquence consiste :

- pour chaque fréquence porteuse de réception $f_{qr}$, à calculer un opérateur matriciel de transposition en fréquence $T_{fqr.fq0r}$ qui transforme la table de calibration en réception $C_{qr}$ associée à la fréquence $f_{qr}$ en la table de calibration en réception $C_{q0r}$ associée à la fréquence $f_{q0r}$ ;
- pour chaque fréquence porteuse d'émission $f_{qe}$, à calculer un opérateur matriciel de transposition en fréquence $T_{fq0r.fqe}$ qui transforme la table de calibration $C_{q0r}$ associée à la fréquence $f_{q0r}$ en la table de calibration $C_{qe}$ associée à la fréquence $f_{qe}$.

Toujours dans le second mode particulier de réalisation, l'étape de calcul des données statistiques consiste, pour chaque trame d'un ensemble de K trames non nécessairement consécutives reçues par l'antenne, K étant suffisamment faible pour que les angles d'arrivée, sur les différents capteurs de l'antenne, des trajets multiples en provenance des mobiles soient stables

- à calculer une matrice $\check{R}_{xx}{}^{fqr} = X_{fqr}(t) . X_{fqr}{}^{+}(t)$,
    où $X_{tqr}(t)$ est un vecteur à N composantes dont la m$^{ème}$ composante représente, à la fréquence porteuse $f_{qr}$, le signal reçu à l'instant t en provenance des mobiles par le m$^{ème}$ capteur de l'antenne, pour m variant de 1 à N, et où t décrit un ensemble d'échantillons de ladite trame, et
- à estimer une matrice $\check{R}_{w}{}^{fqr}$, soit à partir des contributions des brouilleurs et du bruit de fond sur chacun des N capteurs de l'antenne, soit à partir du signal utile reçu par ces capteurs ;

puis :

- à calculer la moyenne des K matrices $\check{R}_{xx}{}^{fqr}$, de façon à obtenir une matrice d'autocorrélation $R_{xx}{}^{fqr}$, qui est une estimée de $E(X_{fqr}(t) . X_{fqr}{}^{+}(t))$, et
- à calculer la moyenne des K matrices $\check{R}_{w}{}^{fqr}$, de façon à obtenir une matrice d'autocorrélation $R_{vv}{}^{fqr}$, qui est une estimée de $E(V_{fqr}(t) . V_{fqr}{}^{+}(t))$, où $V_{fqr}(t)$ est un vecteur à N composantes dont la m$^{ème}$ composante représente, à la fréquence porteuse $f_{qr}$, soit la contribution des brouilleurs et du bruit de fond sur le m$^{ème}$ capteur de l'antenne, soit le signal utile reçu par ce capteur, pour m variant de 1 à N.

Dans les deux modes particuliers de réalisation ci-dessus, les nombres de trames respectifs M et K sont fonction notamment de la vitesse du mobile : plus elle est grande, plus le nombre de trames disponibles est faible. En revanche, pour un mobile à vitesse dite modérée, tel qu'un cycliste ou un piéton qui court, on pourra effectuer les calculs sur un nombre de trames plus élevé.

Dans le premier mode de réalisation précité, en présence de P mobiles contenant un mobile utile avec lequel la communication est à établir, les P-1 autres mobiles constituant des brouilleurs, la matrice $\check{R}_{w}{}^{f1}$ peut être établie, soit à partir des contributions des brouilleurs et du bruit de fond sur les différents capteurs de l'antenne, soit à partir du signal utile reçu par les différents capteurs.

Lorsque la matrice $\check{R}_{w}{}^{f1}$ est établie à partir des contributions des brouilleurs et du bruit de fond, pour estimer la matrice $\check{R}_{w}{}^{f1}$, on peut

- déterminer, pour k variant de 1 à P et m variant de 1 à N, la réponse impulsionnelle $\{g_{k.m.l}, ..., g_{k.m.L}\}$, où L est un entier, du canal de propagation reliant le k$^{ème}$ mobile au m$^{ème}$ capteur de l'antenne ;
- former des matrices de corrélation spatiale à N lignes et N colonnes

$$\sum_{\substack{k=1 \\ k \neq j}}^{P} \sum_{i=1}^{L} G_{k.i} . G_{k.i}{}^{*}$$

où le j$^{\text{ème}}$ mobile est le mobile utile,

où $G_{k.i}$ est le vecteur colonne $[g_{k.l.i},...,g_{k.N.i}]^T$ et

où $(.)^T$ désigne la matrice transposée ;

- effectuer la moyenne de ces matrices de corrélation spatiale sur un nombre prédéterminé de trames du signal ;
- pour m variant de 1 à N, estimer la variance $\sigma_{l.m}{}^2$ du bruit de fond sur le m$^{\text{ème}}$ capteur ;
- additionner la matrice moyenne des matrices de corrélation spatiale et une matrice diagonale où, pour m variant de 1 à N, le terme situé sur la m$^{\text{ème}}$ ligne et dans la m$^{\text{ème}}$ colonne est la variance $\sigma_{l.m}{}^2$, la matrice somme obtenue constituant la matrice $\check{R}_w{}^{t1}$.

Pour cette dernière étape, la variance $\sigma_{l.m}{}^2$ peut être remplacée par toute autre constante appropriée.

En variante, pour estimer la matrice $\check{R}_w{}^{t1}$, toujours lorsqu'elle est établie à partir des contributions des brouilleurs et du bruit de fond sur les différents capteurs de l'antenne, on peut

- à l'aide d'une séquence d'apprentissage de L$_{ref}$ échantillons, pour m variant de 1 à N, estimer, au sens de l'approximation des moindres carrés, la réponse impulsionnelle du canal de propagation reliant le mobile au m$^{\text{ème}}$ capteur de l'antenne, le résidu $b_m$ de cette estimation étant un vecteur colonne constituant une estimée de la contribution des brouilleurs et du bruit de fond sur le m$^{\text{ème}}$ capteur ;
- former la matrice B ayant pour lignes les N vecteurs $b_m{}^T$;
- calculer l'expression $(1/L_B).B.B^+$, où L$_B$ désigne le nombre de colonnes de la matrice B, la matrice obtenue constituant la matrice $\check{R}_w{}^{t1}$.

Lorsque la matrice $\check{R}_w{}^{t1}$ est établie à partir du signal utile reçu par les différents capteurs de l'antenne, pour estimer $\check{R}_w{}^{t1}$, on peut

- déterminer, pour m variant de 1 à N, la réponse impulsionnelle $\{g_{m.l},..., g_{m.L}\}$, où L est un entier, du canal de propagation reliant le mobile au m$^{\text{ème}}$ capteur de l'antenne ;
- former des matrices de corrélation spatiale à N lignes et N colonnes

$$\sum_{i=1}^{L} G_i . G_i{}^{\cdot}$$

où $G_i$ est le vecteur colonne $[g_{l.i},...,g_{N.i}]^T$ ;

- effectuer la moyenne de ces matrices de corrélation spatiale sur un nombre prédéterminé de trames du signal, la matrice obtenue constituant la matrice $\check{R}_w{}^{t1}$.

En variante, pour estimer la matrice $\check{R}_w{}^{t1}$, toujours lorsqu'elle est établie à partir du signal utile reçu par les différents capteurs de l'antenne, on peut

- à l'aide d'une séquence d'apprentissage de L$_{ref}$ échantillons, pour m variant de 1 à N, estimer, au sens de l'approximation des moindres carrés, la réponse impulsionnelle $\{g_{m.l}, ...,g_{m.L}\}$, où L est un entier, du canal de propagation reliant le mobile au m$^{\text{ème}}$ capteur de l'antenne ;
- former des matrices de corrélation spatiale à N lignes et N colonnes

$$\sum_{i=1}^{L} G_i . G_i{}^{\cdot}$$

où $G_i$ est le vecteur colonne $[g_{l.i}, ..., g_{N.i}]^T$;

- effectuer la moyenne de ces matrices de corrélation spatiale sur un nombre prédéterminé de trames du signal, la matrice obtenue constituant la matrice $\check{R}_w{}^{t1}$.

De façon analogue, dans le second mode de réalisation précité, en présence de P mobiles contenant un mobile utile avec lequel la communication est à établir, les P-1 autres mobiles constituant des brouilleurs, la matrice $\check{R}_w{}^{tqr}$, peut être établie, soit à partir des contributions des brouilleurs et du bruit de fond sur les différents capteurs de l'antenne, soit à partir du signal utile reçu par les différents capteurs.

Lorsque la matrice $\check{R}_w{}^{fqr}$ est établie à partir des contributions des brouilleurs et du bruit de fond, pour estimer la matrice $\check{R}_w{}^{fqr}$, on peut

- déterminer, pour k variant de 1 à P et m variant de 1 à N, la réponse impulsionnelle $\{g_{k.m.l},...,g_{k.m.L}\}$, où L est un entier, du canal de propagation reliant le $k^{ème}$ mobile au $m^{ème}$ capteur de l'antenne ;
- former des matrices de corrélation spatiale à N lignes et N colonnes

$$\sum_{\substack{k=1 \\ k \neq j}}^{P} \sum_{i=1}^{L} G_{k,i} \cdot G_{k,i}{}^{*}$$

où le $j^{ème}$ mobile est le mobile utile,
où $G_{k,i}$ est le vecteur colonne $[g_{k.l.i},\cdots, g_{k.N.i}]^T$ et
où $(.)^T$ désigne la matrice transposée ;
- effectuer la moyenne de ces matrices de corrélation spatiale sur un nombre prédéterminé de trames du signal ;
- pour m variant de 1 à N, estimer la variance $\sigma_{l.m}{}^2$ du bruit de fond sur le $m^{ème}$ capteur ;
- additionner la matrice moyenne des matrices de corrélation spatiale et une matrice diagonale où, pour m variant de 1 à N, le terme situé sur la $m^{ème}$ ligne et dans la $m^{ème}$ colonne est la variance $\sigma_{l.m}{}^2$, la matrice somme obtenue constituant la matrice $\check{R}_w{}^{fqr}$.

Pour cette dernière étape, la variance $\sigma_{l.m}{}^2$ peut être remplacée par toute autre constante appropriée.
En variante, pour estimer la matrice $\check{R}_w{}^{fqr}$, toujours lorsqu'elle est établie à partir des contributions des brouilleurs et du bruit de fond sur les différents capteurs de l'antenne, on peut

- à l'aide d'une séquence d'apprentissage de $L_{ref}$ échantillons, pour m variant de 1 à N, estimer, au sens de l'approximation des moindres carrés, la réponse impulsionnelle du canal de propagation reliant le mobile au $m^{ème}$ capteur de l'antenne, le résidu $b_m$ de cette estimation étant un vecteur colonne constituant une estimée de la contribution des brouilleurs et du bruit de fond sur le $m^{ème}$ capteur ;
- former la matrice B ayant pour lignes les N vecteurs $b_m{}^T$ ;
- calculer l'expression $(1/L_B).B.B^+$, où $L_B$ désigne le nombre de colonnes de la matrice B, la matrice obtenue constituant la matrice $\check{R}_w{}^{fqr}$.

Lorsque la matrice $\check{R}_w{}^{fqr}$ est établie à partir du signal utile reçu par les différents capteurs de l'antenne, pour estimer $\check{R}_w{}^{fqr}$, on peut

- déterminer, pour m variant de 1 à N, la réponse impulsionnelle $\{g_{m.l}, ...,g_{m.L}\}$, où L est un entier, du canal de propagation reliant le mobile au $m^{ème}$ capteur de l'antenne ;
- former des matrices de corrélation spatiale à N lignes et N colonnes

$$\sum_{i=1}^{L} G_{i} \cdot G_{i}{}^{*}$$

où $G_i$ est le vecteur colonne $[g_{l.i},...,g_{N.i}]^T$ ;
- effectuer la moyenne de ces matrices de corrélation spatiale sur un nombre prédéterminé de trames du signal, la matrice obtenue constituant la matrice $\check{R}_w{}^{fqr}$.

En variante, pour estimer la matrice $\check{R}_w{}^{fqr}$ toujours lorsqu'elle est établie à partir du signal utile reçu par les différents capteurs de l'antenne, on peut

- à l'aide d'une séquence d'apprentissage de $L_{ref}$ échantillons, pour m variant de 1 à N, estimer, au sens de l'approximation des moindres carrés, la réponse impulsionnelle $\{g_{m.l},...,g_{m.L}\}$, où L est un entier, du canal de propagation reliant le mobile au $m^{ème}$ capteur de l'antenne ;

- former des matrices de corrélation spatiale à N lignes et N colonnes

$$\sum_{i=1}^{L} G_i \cdot G_i^{\cdot}$$

où $G_i$ est le vecteur colonne $[g_{l.i}, ..., g_{N.i}]^T$ ;

- effectuer la moyenne de ces matrices de corrélation spatiale sur un nombre prédéterminé de trames du signal, la matrice obtenue constituant la matrice $\check{R}_w^{fqr}$.

Comme l'indique la figure, l'étape suivante du procédé selon la présente invention consiste à calculer, pour le mobile utile, un jeu optimal de pondérations spatiales à partir des données statistiques et du ou des opérateurs de transposition en fréquence obtenus précédemment, et à partir d'un critère de renforcement du signal utile et d'atténuation des brouilleurs.

Ensuite, on pondère les contributions au signal numérique à émettre par chaque capteur respectivement par des pondérations obtenues à partir des pondérations spatiales du jeu optimal.

Enfin, on émet le signal numérique ainsi pondéré.

Dans le premier mode particulier de réalisation précité, on peut réaliser les trois étapes qui viennent d'être décrites (à savoir, calcul d'un jeu optimal de pondérations spatiales, pondération du signal à émettre et émission du signal pondéré) comme suit :

- on calcule un vecteur de pondérations spatiales $w_{f1}$ de façon que les matrices $R_{xx}^{f1}$, $R_{vv}^{f1}$ et le vecteur $w_{f1}$ vérifient un critère approprié de renforcement du signal utile et d'atténuation des brouilleurs ;
- on applique l'inverse de l'opérateur de transposition en fréquence, noté $T_{f1.f2}^{-1}$, au vecteur de pondérations $w_{f1}$, de façon à obtenir le jeu optimal de pondérations spatiales sous forme d'un vecteur $w_{f2} = T_{f1.f2}^{-1}.w_{f1}$ ;
- pour m variant de 1 à N, on multiplie le signal devant être émis par le m$^{\text{ème}}$ capteur de l'antenne vers le mobile par la m$^{\text{ème}}$ composante du vecteur optimal de pondérations transposé conjugué $w_{f2}^+$.

Dans ce mode de réalisation, lorsque la matrice d'autocorrélation $R_{vv}^{f1}$ est établie à partir des contributions des brouilleurs et du bruit de fond sur les différents capteurs de l'antenne, le critère consiste à choisir pour vecteur de pondérations $w_{f1}$ le vecteur $w_{f1}$ qui rend le rapport $(w_{f1}^+.R_{vv}^{f1}.w_{f1}) / (w_{f1}^+.R_{xx}^{f1}.w_{f1})$ minimal, et lorsque la matrice d'autocorrélation $R_{vv}^{f1}$ est établie à partir du signal utile reçu par les différents capteurs de l'antenne, le critère consiste à choisir pour vecteur de pondérations $w_{f1}$ le vecteur $w_{f1}$ qui rend le rapport $(w_{f1}^+.R_{vv}^{f1}.w_{f1}) / (w_{f1}^+.R_{xx}^{f1}.w_{f1})$ maximal.

En variante, dans le premier mode de réalisation, on peut réaliser les mêmes trois étapes comme suit :

- on applique l'opérateur de transposition en fréquence $T_{f1.f2}$ à la matrice $R_{xx}^{f1}$, de façon à obtenir une matrice $R_{xx}^{f2} = T_{f1.f2}.R_{xx}^{f1}.T_{f1.f2}^+$;
- on applique l'opérateur de transposition en fréquence $T_{f1.f2}$ à la matrice $R_{vv}^{f1}$, de façon à obtenir une matrice $R_{vv}^{f2} = T_{f1.f2}.R_{vv}^{f1}.T_{f1.f2}^+$ ;
- on calcule le jeu optimal de pondérations spatiales sous forme d'un vecteur $w_{f2}$ de façon que les matrices $R_{xx}^{f2}$, $R_{vv}^{f2}$ et le vecteur $w_{f2}$ vérifient un critère approprié de renforcement du signal utile et d'atténuation des brouilleurs ;
- pour m variant de 1 à N, on multiplie le signal devant être émis par le m$^{\text{ème}}$ capteur de l'antenne vers le mobile par la m$^{\text{ème}}$ composante du vecteur optimal de pondérations transposé conjugué $w_{f2}^+$.

Dans cette variante, lorsque la matrice d'autocorrélation $R_{vv}^{f1}$ est établie à partir des contributions des brouilleurs et du bruit de fond sur les différents capteurs de l'antenne, le critère consiste à choisir pour vecteur de pondérations $w_{f2}$ le vecteur $w_{f2}$ qui rend le rapport $(w_{f2}^+.R_{vv}^{f2}.w_{f2}) / (w_{f2}^+.R_{xx}^{f2}.w_{f2})$ minimal, et lorsque la matrice d'autocorrélation $R_{vv}^{f1}$ est établie à partir du signal utile reçu par les différents capteurs de l'antenne, le critère consiste à choisir pour vecteur optimal de pondérations $w_{f2}$ le vecteur $w_{f2}$ qui rend le rapport $(w_{f2}^+.R_{vv}^{f2}{}_2.w_{f2})/(w_{f2}^+.R_{xx}^{f2}.w_{f2})$ maximal.

Dans le second mode particulier de réalisation précité, on peut réaliser les mêmes trois étapes comme suit :

- pour la fréquence porteuse de réception $f_{q0r}$, on calcule un vecteur de pondérations spatiales $w_{fq0r}$ de façon que les matrices $R_{xx}^{fq0r}$, $R_{vv}^{fq0r}$ et le vecteur $w_{fq0r}$ vérifient un critère approprié de renforcement du signal utile et d'atténuation des brouilleurs ;
- pour chaque fréquence porteuse d'émission $f_{qe}$, on applique l'inverse de l'opérateur de transposition en fréquence, noté $T_{fq0r.fqe}^{-1}$, au vecteur de pondérations $w_{fq0r}$, de façon à obtenir le jeu optimal de pondérations spatiales sous forme d'un vecteur $w_{fqe} = T_{fq0r.fqe}^{-1} \cdot w_{fq0r}$ ;

- pour m variant de 1 à N, on multiplie le signal devant être émis à la fréquence porteuse d'émission $f_{qe}$ par le $m^{ème}$ capteur de l'antenne vers le mobile par la $m^{ème}$ composante du vecteur optimal de pondérations transposé conjugué $w_{fqe}^{+}$.

Dans ce mode de réalisation, lorsque la matrice d'autocorrélation $R_{vv}^{fqr}$ est établie à partir des contributions des brouilleurs et du bruit de fond sur les différents capteurs de l'antenne, le critère consiste à choisir pour vecteur de pondérations $w_{fq0r}$ le vecteur $w_{fq0r}$ qui rend le rapport $(w_{fq0r}^{+}.R_{vv}^{fq0r}.w_{fq0r}) / (w_{fq0r}^{+}.R_{xx}^{fq0r}.w_{fq0r})$ minimal, et lorsque la matrice d'autocorrélation $R_{vv}^{fqr}$ est établie à partir du signal utile reçu par les différents capteurs de l'antenne, le critère consiste à choisir pour vecteur optimal de pondérations $w_{fq0r}$ le vecteur $w_{fq0r}$ qui rend le rapport $(w_{fq0r}^{+}.R_{vv}^{fq0r}) / (w_{fq0r}^{+}.R_{xx}^{fq0r}.w_{fq0r})$ maximal.

En variante, dans le second mode de réalisation, on peut réaliser les mêmes trois étapes comme suit :

- on applique respectivement aux K matrices $\check{R}_{xx}^{fqr}$ les K opérateurs de transposition en fréquence $T_{fqr.fq0r}$ correspondants, de façon à obtenir K matrices $\check{R}_{xx}^{fq0r} = T_{fqr.fq0r}. \check{R}_{xx}^{fqr} .T_{fqr.fq0r}^{+}$ ;
- on applique les K opérateurs de transposition en fréquence $T_{fqr.fq0r}$ respectivement aux K matrices $\check{R}_{w}^{fqr}$, de façon à obtenir K matrices $\check{R}_{vv}^{fq0r} = T_{fqr.fq0r}. \check{R}_{w}^{fqr} .T_{far.fa0r}^{+}$;
- on calcule la moyenne $R_{xx}^{fq0r}$ des K matrices $\check{R}_{xx}^{fq0r}$ et la moyenne $R_{vv}^{fq0r}$ des K matrices $\check{R}_{vv}^{fq0r}$ ;
- pour chaque fréquence porteuse d'émission $f_{qe}$, on applique l'opérateur de transposition en fréquence $T_{fq0r.fqe}$ à la matrice moyenne $R_{xx}^{fq0r}$, de façon à obtenir une matrice $R_{xx}^{fqe} = T_{fq0r.fqe}.R_{xx}^{fq0r}.T_{fq0r.fqe}^{+}$ ;
- pour chaque fréquence porteuse d'émission $f_{qe}$, on applique l'opérateur de transposition en fréquence $T_{fq0r,fqe}$ à la matrice moyenne $R_{vv}^{fq0r}$, de façon à obtenir une matrice $R_{vv}^{fqe} = T_{fq0r.fqe}.R_{vv}^{fq0r}.T_{fq0r.fqe}^{+}$;
- pour chaque fréquence porteuse d'émission $f_{qe}$, on calcule le jeu optimal de pondérations spatiales sous forme d'un vecteur $w_{fqe}$ de façon que les matrices $R_{xx}^{fqe}$, $R_{vv}^{fqe}$ et le vecteur $w_{fqe}$ vérifient un critère approprié de renforcement du signal utile et d'atténuation des brouilleurs ;
- pour m variant de 1 à N, on multiplie le signal devant être émis à la fréquence porteuse d'émission $f_{qe}$ par le $m^{ème}$ capteur de l'antenne vers le mobile par la $m^{ème}$ composante du vecteur optimal de pondérations transposé conjugué $w_{fqe}^{+}$.

Dans cette variante, lorsque la matrice d'autocorrélation $R_{vv}^{fqr}$ est établie à partir des contributions des brouilleurs et du bruit de fond sur les différents capteurs de l'antenne, le critère consiste à choisir pour vecteur de pondérations $w_{fqe}$ le vecteur $w_{fqe}$ qui rend le rapport $(w_{fqe}^{+}.R_{vv}^{fqe}.w_{fqe}) / (w_{fqe}^{+}.R_{xx}^{fqe}.w_{fqe})$ minimal, et lorsque la matrice d'autocorrélation $R_{vv}^{fqr}$ est établie à partir du signal utile reçu par les différents capteurs de l'antenne, le critère consiste à choisir pour vecteur optimal de pondérations $w_{fqe}$ le vecteur $w_{fqe}$ qui rend le rapport $(w_{fqe}^{+}.R_{vv}^{fqe}.w_{fqe}) / (w_{fqe}^{+}.R_{xx}^{fqe}.w_{fqe})$ maximal.

Dans une autre variante encore de réalisation, l'opérateur de transposition en fréquence (étape c du procédé) est implicite. La démarche est alors la suivante. On détermine un jeu de pondérations $W_{fqr}$ qui est optimal à la fréquence de réception. On calcule ensuite le jeu de pondérations à la fréquence d'émission en ajustant, au sens des moindres carrés, le diagramme d'antenne $W_{fqe}^{*} S_{\lambda e}(\alpha)$ à $f_{qe}$ au diagramme d'antenne $W_{fqr}^{*} S_{\lambda}(\alpha)$ à la fréquence de réception $f_{qr}$.

Les pondérations ainsi obtenues sont égales à $T_{fqefqr}^{*} W_{fqr}$ où $T_{fqefqr}$ est la matrice de transposition de fréquence de $f_{qe}$ vers $f_{qr}$.

Une telle variante est pleinement équivalente, du point de vue des moyens mis en oeuvre, des fonctions et du résultat, à celle définie en détail plus haut.

**Revendications**

1. Procédé d'émission d'un signal numérique composé de trames successives d'échantillons, par une station de base équipée d'une antenne à plusieurs capteurs vers un mobile déterminé en présence de brouilleurs et de bruit de fond, à l'aide d'au moins une fréquence porteuse de réception et au moins une fréquence porteuse d'émission, suivant lequel :

- préalablement à la transmission :

(a) pour chaque fréquence porteuse de réception, on élabore une table de calibration en réception, représentative de la variation de contribution, suivant la direction de réception, des différents capteurs en réception à ladite fréquence porteuse de réception ;
(b) pour chaque fréquence porteuse d'émission, on élabore une table de calibration en émission, représentative de la variation de contribution, suivant la direction d'émission, des différents capteurs en émission à ladite fréquence porteuse d'émission ;

(c) on calcule au moins un opérateur de transposition en fréquence qui transforme approximativement une dite table de calibration en réception en une table de calibration en émission ;

- puis, lors de la transmission :

(d) on calcule des données statistiques à partir de plusieurs échantillons de plusieurs trames des signaux reçus par les différents capteurs en provenance du mobile et des brouilleurs ;

(e) on calcule, pour ledit mobile, un jeu optimal de pondérations spatiales à partir desdites données statistiques, dudit ou desdits opérateurs de transposition en fréquence et d'un critère de renforcement du signal utile et d'atténuation des brouilleurs ;

(f) on pondère les contributions audit signal numérique à émettre par chaque capteur respectivement par des pondérations obtenues à partir des pondérations spatiales dudit jeu optimal ;

(g) on émet ledit signal numérique ainsi pondéré, procédé dans lequel on met en oeuvre une unique fréquence porteuse de réception $f_1$ et une unique fréquence porteuse d'émission $f_2$, de sorte qu'à l'étape c) :

- on calcule un unique opérateur matriciel de transposition en fréquence $T_{f1,f2}$ qui transforme la table de calibration en réception $C_1$ associée à la fréquence $f_1$ en la table de calibration en émission $C_2$ associée à la fréquence $f_2$.

2. Procédé selon la revendication 1, **caractérisé en ce que** :

(d1) pour chaque trame d'un ensemble de M trames non nécessairement consécutives reçues par l'antenne, M étant suffisamment faible pour que les angles d'arrivée, sur les différents capteurs de l'antenne, des trajets multiples en provenance des mobiles soient stable :

- on calcule une matrice $\tilde{R}_{xx}{}^n = X_{f1}(t).X_{f1}{}^+(t)$,

où $X_{f1}(t)$ est un vecteur à N composantes dont la $m^{ème}$ composante représente, à la fréquence porteuse $f_1$, le signal reçu à l'instant t en provenance des mobiles par le $m^{ème}$ capteur de l'antenne, pour m variant de 1 à N,

où $(.)^+$ désigne la matrice transposée conjuguée, et

où t décrit un ensemble d'échantillons de ladite trame, et

- on estime une matrice $\tilde{R}_{vv}{}^n$, soit à partir des contributions des brouilleurs et du bruit de fond sur chacun des N capteurs de l'antenne, soit à partir du signal utile reçu par ces capteurs ;

puis :

- on calcule la moyenne desdites M matrices $\tilde{R}_{xx}{}^n$, de façon à obtenir une matrice d'autocorrélation $R_{xx}{}^{f1}$, qui est une estimée de $E(X_{f1}(t).X_{f1}{}^+(t))$, où E désigne l'espérance mathématique, et

- on calcule la moyenne desdites M matrices $\tilde{R}_{vv}{}^n$, de façon à obtenir une matrice d'autocorrélation $R_{vv}{}^{f1}$, qui est une estimée de $E(V_{f1}(t).V_{f1}{}^+(t))$, où $V_{f1}(t)$ est un vecteur à N composantes dont la $m^{ème}$ composante représente, à la fréquence porteuse $f_1$, soit la contribution des brouilleurs et du bruit de fond sur le $m^{ème}$ capteur, pour m variant de 1 à N.

3. Procédé selon la revendication 2, **caractérisé en ce que**

(e1) on calcule un vecteur de pondérations spatiales $w_{f1}$ de façon que les matrices $R_{xx}{}^{f1}$, $R_{vv}{}^{f1}$ et le vecteur $W_{f1}$ vérifient un critère approprié de renforcement du signal utile et d'atténuation des brouilleurs ;

(e2) on applique l'inverse de l'opérateur de transposition en fréquence, noté $T_{f1,f2}{}^{-1}$, au vecteur de pondération $w_{f1}$, de façon à obtenir ledit jeu optimal de pondérations spatiales sous forme d'un vecteur $w_{f2} = T_{f1,f2}{}^{-1}.w_{f1}$ ;

(f1) pour m variant de 1 à N, on multiplie le signal devant être émis par le $m^{ème}$ capteur de l'antenne vers le mobile par la $m^{ème}$ composante du vecteur optimal de pondérations transposé conjugué $w_{f2}{}^+$.

4. Procédé selon la revendication 3, dans lequel matrice d'autocorrélation $R_{vv}{}^{f1}$ est établie à partir des contributions des brouilleurs et du bruit de fond sur les différents capteurs de l'antenne, **caractérisé en ce que**

(e11) ledit critère consiste à choisir pour vecteur de pondérations $w_{f1}$ le vecteur $w_{f1}$ qui rend le rapport $(w_{f1}{}^+.R_{vv}{}^{f1}.w_{f1}) / (w_{f1}{}^+.R_{xx}{}^{f1}.w_{f1})$ minimal.

5. Procédé selon la revendication 3, dans lequel la matrice d'autocorrélation $R_{vv}{}^{f1}$ est établie à partir du signal utile reçu par les différents capteurs de l'antenne, **caractérisé en ce que**

(e11) ledit critère consiste à choisir pour vecteur de pondérations $w_{f1}$ le vecteur $w_{f1}$ qui rend le rapport $(w_{f1}^{+} \cdot R_{vv}^{f1} \cdot w_{f1}) / (w_{f1}^{+} \cdot R_{xx}^{f1} \cdot w_{f1})$ maximal.

**6.** Procédé selon la revendication 2, **caractérisé en ce que**

(e1) on applique l'opérateur de transposition en fréquence $T_{f1,f2}$ à la matrice $R_{xx}^{f1}$, de façon à obtenir une matrice $R_{xx}^{f2} = T_{f1,f2} \cdot R_{xx}^{f1} \cdot T_{f1,f2}^{+}$;

(e2) on applique l'opérateur de transposition en fréquence $T_{f1,f2}$ à la matrice $R_{vv}^{f1}$, de façon à obtenir une matrice $R_{vv}^{f2} = T_{f1,f2} \cdot R_{vv}^{f1} \cdot T_{f1,f2}^{+}$ ;

(e3) on calcule ledit jeu optimal de pondérations spatiales sous forme d'un vecteur $w_{f2}$ de façon que les matrices $R_{xx}^{f2}$, $R_{vv}^{f2}$ et le vecteur $W_{f2}$ vérifient un critère approprié de renforcement du signal utile et d'atténuation des brouilleurs ;

(f1) pour m variant de 1 à N, on multiplie le signal devant être émis par le $m^{ème}$ capteur de l'antenne vers le mobile par la $m^{ème}$ composante du vecteur optimal de pondérations transposé conjugué $w_{f2}^{+}$.

**7.** Procédé selon la revendication 6, dans lequel la matrice d'autocorrélation $R_{vv}^{f1}$ est établie à partir des contributions des brouilleurs et du bruit de fond sur les différents capteurs de l'antenne, **caractérisé en ce que**

(e33) ledit critère consiste à choisir pour vecteur de pondérations $w_{f2}$ le vecteur $w_{f2}$ qui rend le rapport $(w_{f2}^{+} \cdot R_{vv}^{f2} \cdot w_{f2}) / (w_{f2}^{+} \cdot R_{xx}^{f2} \cdot w_{f2})$ minimal.

**8.** Procédé selon la revendication 6, dans lequel la matrice d'autocorrélation $R_{vv}^{f1}$ est établie à partir du signal utile reçu par les différents capteurs de l'antenne, **caractérisé en ce que**

(e33) ledit critère consiste à choisir pour vecteur de pondérations $w_{f2}$ le vecteur $w_{f2}$ qui rend le rapport $(w_{f2}^{+} \cdot R_{vv}^{f2} \cdot w_{f2})/(w_{f2}^{+} \cdot R_{xx}^{f2} \cdot w_{f2})$ maximal.

**9.** Procédé selon la revendication 2 en présence de P mobiles contenant un mobile utile avec lequel la communication est à établir, les P-1 autres mobiles constituant des brouilleurs, dans lequel la matrice $\tilde{R}_{vv}^{f1}$ est établie à partir des contributions des brouilleurs et du bruit de fond sur les différents capteurs de l'antenne, **caractérisé en ce que**, pour estimer la matrice $\tilde{R}_{vv}^{f1}$,

(d11) on détermine, pour k variant de 1 à P et m variant de 1 à N, la réponse impulsionnelle $\{g_{k,m,l}, ..., g_{k,m,L}\}$, où L est un entier, du canal de propagation reliant le $k^{éme}$ mobile au $m^{ème}$ capteur de l'antenne ;

(d12) on forme des matrices de corrélation spatiale à N lignes et N colonnes

$$\sum_{\substack{k=1 \\ k \neq j}}^{P} \sum_{i=1}^{L} G_{k,i} \cdot G_{k,i}^{+}$$

où le $j^{ème}$ mobile est le mobile utile ,

où $G_{k,i}$ est le vecteur colonne $[g_{k,l,i}, ..., g_{k,N,i}]^{T}$ et

où $(.)^{T}$ désigne la matrice transposée ;

(d13) on effectue la moyenne de ces matrices de corrélation spatiale sur un nombre prédéterminé de trames du signal ;

(d14) pour m variant de 1 à N, on estime la variance $\sigma_{l,m}^{2}$ du bruit de fond sur le $m^{ème}$ capteur ;

(d15) on additionne la matrice moyenne obtenue à l'étape (d13) et une matrice diagonale où, pour m variant de 1 à N, le terme situé sur le $m^{ème}$ ligne et dans la $m^{ème}$ colonne est la variance $\sigma_{l,m}^{2}$, la matrice somme obtenue constituant la matrice $\tilde{R}_{vv}^{f1}$.

**10.** Procédé selon la revendication 2, dans lequel la matrice $\tilde{R}_{vv}^{f1}$ est établie à partir des contributions des brouilleurs et du bruit de fond sur les différents capteurs de l'antenne, **caractérisé en ce que**, pour estimer la matrice $\tilde{R}_{vv}^{f1}$,

(d11) à l'aide d'une séquence d'apprentissage de $L_{ref}$ échantillons, pour m variant de 1 à N, on estime au sens de l'approximation des moindres carrés, la réponse impulsionnelle du canal de propagation reliant le mobile au $m^{ème}$ capteur de l'antenne, le résidu $b_{m}$ de cette estimation étant un vecteur colonne constituant une estimée de la contribution des brouilleurs et du bruit de fond sur le $m^{ème}$ capteur ;

(d12) on forme la matrice B ayant pour lignes les N vecteurs $b_{m}^{T}$ ;

(d13) on calcule l'expression $(1/L_{B}) \cdot B \cdot B^{+}$, où $L_{B}$ désigne le nombre de colonnes de la matrice B, la matrice obtenue constituant la matrice $\tilde{R}_{vv}^{f1}$.

**11.** Procédé selon la revendication 2, dans lequel la matrice $\tilde{R}_{vv}{}^n$ est établie à partir du signal utile reçu par les différents capteurs de l'antenne, **caractérisé en ce que**, pour estimer la matrice $\tilde{R}_{vv}{}^n$,

(d11) on détermine, pour m variant de 1 à N, la réponse impulsionnelle $\{g_{m,l}, ...g_{m,L}\}$, où L est un entier, du canal de propagation reliant le mobile au m$^{\text{ème}}$ capteur de l'antenne ;

(d12) on forme des matrices de corrélation spatiale à N lignes et N colonnes

$$\sum_{i=1}^{L} G_i.G_i{}^+$$

où $G_i$ est le vecteur colonne $[g_{l,i}, ..., g_{N,i}]^T$ ;

(d13) on effectue la moyenne de ces matrices de corrélation spatiale sur un nombre prédéterminé de trames du signal, la matrice obtenue constituant la matrice $\tilde{R}_{vv}{}^n$ .

**12.** Procédé selon la revendication 2, dans lequel la matrice $\tilde{R}_{vv}{}^n$ est établie à partir du signal utile reçu par les différents capteurs de l'antenne, **caractérisé en ce que**, pour estimer la matrice $\tilde{R}_{vv}{}^n$,

(d11) à l'aide d'une séquence d'apprentissage de $L_{ref}$ échantillons, pour m variant de 1 à N, on estime, au sens de l'approximation des moindres carrés, la réponse impulsionnelle $\{g_{m,l}, ...g_{m,L}\}$, où L est un entier, du canal de propagation reliant le mobile au m$^{\text{ème}}$ capteur de l'antenne ;

(d12) on forme des matrices de corrélation spatiale à N lignes et N colonnes

$$\sum_{i=1}^{L} G_i.G_i{}^+$$

où $G_i$ est le vecteur colonne $[g_{l,i}, ...,g_{N,i}]^T$ ;

(d13) on effectue la moyenne de ces matrices de corrélation spatiale sur un nombre prédéterminé de trames du signal, la matrice obtenue constituant la matrice $\tilde{R}_{vv}{}^n$.

**13.** Procédé d'émission d'un signal numérique composé de trames successives d'échantillons, par une station de base équipée d'une antenne à plusieurs capteurs vers un mobile déterminé en présence de brouilleurs et de bruit de fond, à l'aide d'au moins une fréquence porteuse de réception et au moins une fréquence porteuse d'émission, suivant lequel :

- préalablement à la transmission :

(a) pour chaque fréquence porteuse de réception, on élabore une table de calibration en réception, représentative de la variation de contribution, suivant la direction de réception, des différents capteurs en réception à ladite fréquence porteuse de réception ;

(b) pour chaque fréquence porteuse d'émission, on élabore une table de calibration en émission, représentative de la variation de contribution, suivant la direction d'émission, des différents capteurs en émission à ladite fréquence porteuse d'émission ;

(c) on calcule au moins un opérateur de transposition en fréquence qui transforme approximativement une dite table de calibration en réception en une table de calibration en émission ou en réception ;

- puis, lors de la transmission :

(d) on calcule des données statistiques à partir de plusieurs échantillons de plusieurs trames des signaux reçus par les différents capteurs en provenance du mobile et des brouilleurs ;

(e) on calcule, pour ledit mobile, un jeu optimal de pondérations spatiales à partir desdites données statistiques, dudit ou desdits opérateurs de transposition en fréquence et d'un critère de renforcement du signal utile et d'atténuation des brouilleurs ;

(f) on pondère les contributions audit signal numérique à émettre par chaque capteur respectivement par des pondérations obtenues à partir des pondérations spatiales dudit jeu optimal ;

(g) on émet ledit signal numérique ainsi pondéré, procédé dans lequel on met en oeuvre plusieurs fréquences porteuses de réception $f_{qr}$ et plusieurs fréquences porteuses d'émission $f_{qe}$, chaque trame dudit signal numérique étant transmise à l'aide d'une fréquence porteuse différente, à une répétition périodique près, de sorte qu'à l'étape a) :

(a1) on élabore en outre, pour une fréquence porteuse de réception $f_{q0r}$ choisie arbitrairement, une table de calibration en réception $C_{q0r}$, représentative de la variation de contribution, suivant la direction de réception, des différents capteurs en réception à ladite fréquence porteuse de réception $f_{q0r}$ ;
   et à l'étape c) :
(c1) pour chaque dite fréquence porteuse de réception $f_{qr}$, on calcule un opérateur matriciel de transposition en fréquence $T_{fqr.fq0r}$ qui transforme la table de calibration en réception $C_{qr}$ associée à la fréquence $f_{qr}$ en la table de calibration en réception $C_{q0r}$ associée à ladite fréquence $f_{q0r}$ ;
(c2) pour chaque dite fréquence porteuse d'émission $f_{qe}$, on calcule un opérateur matriciel de transposition en fréquence $T_{fq0r.fqe}$ qui transforme la table de calibration $C_{q0r}$ associée à la fréquence $f_{q0r}$ en la table de calibration en réception $C_{qe}$ associée à ladite fréquence $f_{qe}$.

**14.** Procédé selon la revendication 13, **caractérisé en ce que** :

(d1) pour chaque trame d'un ensemble de K trames non nécessairement consécutives reçues par l'antenne, K étant suffisamment faible pour que les angles d'arrivée, sur les différents capteurs de l'antenne, des trajets multiples en provenance du mobile sonore soient stables :

- on calcule une matrice $\tilde{R}_{xx}{}^{fqr} = X_{fqr}(t).X_{fqr}{}^{+}(t)$,
   où $X_{fqr}(t)$ est un vecteur à N composantes dont la $m^{ème}$ composante représente, à la fréquence porteuse de $f_{qr}$, le signal reçu à l'instant t en provenance du mobile par le $m^{ème}$ capteur de l'antenne, pour m variant de 1 à N, et
   où t décrit un ensemble d'échantillons de ladite trame, et
- on estime une matrice $\tilde{R}_{vv}{}^{fqr}$, soit à partir des contributions des brouilleurs et du bruit de fond sur chacun des N capteurs de l'antenne, soit à partir du signal utile reçu par ces capteurs ;
   puis
- on calcule la moyenne desdites K matrices $\tilde{R}_{xx}{}^{fqr}$, de façon à obtenir une matrice d'autocorrélation $R_{xx}{}^{fqr}$, qui est une estimée de $E(X_{fqr}(t).X_{fqr}{}^{+}(t))$, et
- on calcule la moyenne desdites M matrices $\tilde{R}_{vv}{}^{fqr}$, de façon à obtenir une matrice d'autocorrélation $R_{vv}{}^{fqr}$, qui est une estimée de $E(V_{fqr}(t).V_{fqr}{}^{+}(t))$, où $V_{fqr}(t)$ est un vecteur à N composantes dont la $m^{ème}$ composante représente, à la fréquence porteuse $f_{qr}$, soit la contribution des brouilleurs et du bruit de fond sur le $m^{ème}$ capteur de l'antenne, soit le signal reçu par ce capteur, pour m variant de 1 à N.

**15.** Procédé selon la revendication 14 en présence de P mobiles contenant un mobile utile avec lequel la communication est à établir, les P-1 autres mobiles constituant des brouilleurs, dans lequel la matrice $\tilde{R}_{vv}{}^{fqr}$ est établie à partir des contributions des brouilleurs et du bruit de fond sur les différents capteurs de l'antenne, **caractérisé en ce que**, pour estimer la matrice $\tilde{R}_{vv}{}^{fqr}$,
   (d11) on détermine, pour k variant de 1 à P et m variant de 1 à N, la réponse impulsionnelle $\{g_{k,m,l,...}, g_{k,m,L}\}$, où L est un entier, du canal de propagation reliant le $k^{ème}$ mobile au $m^{ème}$ capteur de l'antenne ;
   (d12) on forme des matrices de corrélation spatiale à N lignes et N colonnes

$$\sum_{\substack{k=1 \\ k \neq j}}^{P} \sum_{i=1}^{L} G_{k,i}.G_{k,i}{}^{+}$$

où le $j^{ème}$ mobile est le mobile utile
où $G_{k,i}$ est le vecteur colonne $[g_{k,l,i}, ..., g_{k,N,i}]^{T}$ et
où $(.)^{T}$ désigne la matrice transposée ;
   (d13) on effectue la moyenne de ces matrices de corrélation spatiale sur un nombre prédéterminé de trames du signal ;
   (d14) pour m variant de 1 à N, on estime la variance $\sigma_{l,m}{}^2$ du bruit de fond sur le $m^{ème}$ capteur ;
   (d15) on additionne la matrice moyenne obtenue à l'étape (d13) et une matrice diagonale où, pour m variant de 1 à N, le terme situé sur le $m^{ème}$ ligne et dans la $m^{ème}$ colonne est la variance $\sigma_{l,m}{}^2$, la matrice somme obtenue

constituant la matrice $\tilde{R}_{vv}^{fqr}$.

**16.** Procédé selon la revendication 14, dans lequel la matrice $R_{vv}^{fqr}$ est établie à partir des contributions des brouilleurs et du bruit de fond sur les différents capteurs de l'antenne, **caractérisé en ce que**, pour estimer la matrice $\tilde{R}_{vv}^{fqr}$,

(d11) à l'aide d'une séquence d'apprentissage de $L_{ref}$ échantillons, pour m variant de 1 à N, on estime au sens de l'approximation des moindres carrés, la réponse impulsionnelle du canal de propagation reliant le mobile au m$^{ème}$ capteur de l'antenne, le résidu $b_m$ de cette estimation étant un vecteur colonne constituant une estimée de la contribution des brouilleurs et du bruit de fond sur le m$^{ème}$ capteur ;

(d12) on forme la matrice B ayant pour lignes les N vecteurs $b_m^T$ ;

(d13) on calcule l'expression $(1/L_B).B.B^+$, où $L_B$ désigne le nombre de colonnes de la matrice B, la matrice obtenue constituant la matrice $\tilde{R}_{vv}^{fqr}$.

**17.** Procédé selon la revendication 14, dans lequel la matrice $\tilde{R}_{vv}^{fqr}$ est établie à partir du signal utile reçu par les différents capteurs de l'antenne, **caractérisé en ce que**, pour estimer la matrice $\tilde{R}_{vv}^{fqr}$,

(d11) on détermine, pour m variant de 1 à N, la réponse impulsionnelle $\{g_{m,l}, ...g_{m,L}\}$, où L est un entier, du canal de propagation reliant le mobile au m$^{ème}$ capteur de l'antenne ;

(d12) on forme des matrices de corrélation spatiale à N lignes et N colonnes

$$\sum_{i=1}^{L} G_i.G_i^+$$

où $G_i$ est le vecteur colonne $[g_{l,i}, ..., g_{N,i}]^T$ ;

(d13) on effectue la moyenne de ces matrices de corrélation spatiale sur un nombre prédéterminé de trames du signal, la matrice obtenue constituant la matrice $\tilde{R}_{vv}^{fqr}$.

**18.** Procédé selon la revendication 14, dans lequel la matrice $\tilde{R}_{vv}^{fqr}$ est établie à partir du signal utile reçu par les différents capteurs de l'antenne, **caractérisé en ce que**, pour estimer la matrice $\tilde{R}_{vv}^{fqr}$,

(d11) à l'aide d'une séquence d'apprentissage de $L_{ref}$ échantillons, pour m variant de 1 à N, on estime, au sens de l'approximation des moindres carrés, la réponse impulsionnelle $\{g_{m,l}, ...g_{m,L}\}$, où L est un entier, du canal de propagation reliant le mobile au m$^{ème}$ capteur de l'antenne ;

(d12) on forme des matrices de corrélation spatiale à N lignes et N colonnes

$$\sum_{i=1}^{L} G_i.G_i^+$$

où $G_i$ est le vecteur colonne $[g_{l,i}, ..., g_{N,i}]^T$ ;

(d13) on effectue la moyenne de ces matrices de corrélation spatiale sur un nombre prédéterminé de trames du signal, la matrice obtenue constituant la matrice $\tilde{R}_{vv}^{fqr}$.

**19.** Procédé selon la revendication 14, **caractérisé en ce que**

(e1) pour ladite fréquence porteuse de réception $f_{q0r}$, on calcule un vecteur de pondérations spatiales $w_{fq0r}$ de façon que les matrices $R_{xx}^{fq0r}$, $R_{vv}^{fq0r}$ et le vecteur $W_{fq0r}$ vérifient un critère approprié de renforcement du signal utile et d'atténuation des brouilleurs ;

(e2) pour chaque fréquence porteuse d'émission $f_{qe}$, on applique l'inverse de l'opérateur de transposition en fréquence, noté $T_{fq0r,fqe}^{-1}$, au vecteur de pondérations $w_{fq0r}$, de façon à obtenir ledit jeu optimal de pondérations spatiales sous forme d'un vecteur $w_{fqe} = T_{fq0r,fqe}^{-1}.w_{fq0r}$;

(f1) pour m variant de 1 à N, on multiplie le signal devant être émis à la fréquence porteuse d'émission $f_{qe}$ par le m$^{ème}$ capteur de l'antenne vers le mobile par la m$^{ème}$ composante du vecteur optimal de pondérations transposé conjugué $w_{qe}^+$.

**20.** Procédé selon la revendication 19, dans lequel la matrice d'autocorrélation $R_{vv}^{fqr}$ est établie à partir des contributions des brouilleurs et du bruit de fond sur les différents capteurs de l'antenne, **caractérisé en ce que**

(e11) ledit critère consiste à choisir pour vecteur de pondérations $w_{fq0r}$ le vecteur $w_{fq0r}$ qui rend le rapport

$(W_{fq0r}{}^+ . R_{vv}{}^{fq0r} . W^{fq0r})/(W_{fq0r}{}^+ . R_{xx}{}^{fq0r} . W_{fq0r})$ minimal.

**21.** Procédé selon la revendication 19, dans lequel la matrice d'autocorrélation $R_{vv}{}^{fqr}$ est établie à partir du signal utile reçu par les différents capteurs de l'antenne, **caractérisé en ce que**

(e11) ledit critère consiste à choisir pour vecteur de pondérations $w_{fq0r}$ le vecteur $W_{fq0r}$ qui rend le rapport $(W_{fq0r}{}^+ . R_{vv}{}^{fq0r} . W_{fq0r}) / (W_{fq0r}{}^+ . R_{xx}{}^{fq0r} . W_{fq0r})$ maximal.

**22.** Procédé selon la revendication 14, **caractérisé en ce que**

(e1) on applique respectivement auxdites K matrices $\tilde{R}_{xx}{}^{fqr}$ les K opérateurs de transposition en fréquence $T_{fqr,fq0r}$ correspondants, de façon à obtenir K matrices $\tilde{R}_{xx}{}^{fq0r} = T_{fqr,fq0r} \cdot \tilde{R}_{xx}{}^{fqr} \cdot T_{fqr,fq0r}{}^+$ ;

(e2) on applique lesdits K opérateurs de transposition en fréquence $T_{fqr,fq0r}$ respectivement auxdites K matrices à $\tilde{R}_{vv}{}^{fqr}$, de façon à obtenir K matrices $\tilde{R}_{vv}{}^{fq0r} = T_{fqr,fq0r} \cdot \tilde{R}_{vv}{}^{fqr} \cdot T_{fqr,fq0r}{}^+$ ;

(e3) on calcule la moyenne $R_{xx}{}^{fq0r}$ desdites K matrices $\tilde{R}_{xx}{}^{fqr}$ et la moyenne $R_{vv}{}^{fq0r}$ desdites K matrices $\tilde{R}_{vv}{}^{fq0r}$ ;

(e4) pour chaque fréquence porteuse d'émission $f_{qe}$, on applique l'opérateur de transposition en fréquence $T_{fq0r, fqe}$ à la matrice moyenne $R_{xx}{}^{fq0r}$, de façon à obtenir une matrice $R_{xx}{}^{fqe} = T_{fq0r,fqe} . R_{xx}{}^{fq0r} . T_{fq0r,fqe}{}^+$ ;

(e5) pour chaque fréquence porteuse d'émission $f_{qe}$, on applique l'opérateur de transposition en fréquence $T_{fq0r,fqe}$ à la matrice moyenne $R_{vv}{}^{fq0r}$, de façon à obtenir une matrice $R_{vv}{}^{fqe} = T_{fq0r,fqe} . R_{vv}{}^{fq0r} . T_{fq0r,fqe}{}^+$ ;

(e6) pour chaque fréquence porteuse d'émission $f_{qe}$, on calcule ledit jeu optimal de pondérations spatiales sous forme d'un vecteur $w_{fqe}$ de façon que les matrices $R_{xx}{}^{fqe}$, $R_{vv}{}^{fqe}$ et le vecteur $W_{fqe}$ vérifient un critère approprié de renforcement du signal utile et d'atténuation des brouilleurs ;

(f1) pour m variant de 1 à N, on multiplie le signal devant être émis à la fréquence porteuse d'émission $f_{qe}$ par le m$^{ème}$ capteur de l'antenne vers le mobile par la m$^{ème}$ composante du vecteur optimal de pondérations transposé conjugué $w_{fqe}{}^+$.

**23.** Procédé selon la revendication 22, dans lequel la matrice d'autocorrélation $R_{vv}{}^{fqr}$ est établie à partir des contributions des brouilleurs et du bruit de fond sur les différents capteurs de l'antenne, **caractérisé en ce que**

(e61) ledit critère consiste à choisir pour vecteur de pondérations $w_{fqe}$ le vecteur $w_{fqe}$ qui rend le rapport $(w_{fqe}{}^+ . R_{vv}{}^{fqe} . w_{fqe}) / (w_{fqe}{}^+ . R_{xx}{}^{fqe}, w_{fqe})$ minimal.

**24.** Procédé selon la revendication 22, dans lequel la matrice d'autocorrélation $R_{vv}{}^{fqr}$ est établie à partir du signal utile reçu par les différents capteurs de l'antenne, **caractérisé en ce que**

(e61) ledit critère consiste à choisir pour vecteur de pondérations $w_{fqe}$ le vecteur $w_{fqe}$ qui rend le rapport $(w_{fqe}{}^+ . R_{vv}{}^{fqe} . w_{fqe}) / (w_{fqe}{}^+ . R_{xx}{}^{fqe} . w_{fqe})$ maximal.

**25.** Procédé selon l'une des revendications 1 et 13, **caractérisé en ce que**, pour élaborer chaque dite table de calibration en réception,

(a1) on forme une matrice où chaque colonne est un vecteur directionnel, dont la m$^{ème}$ composante représente le signal qui serait reçu par le m$^{ème}$ capteur, m variant de 1 à N, où N est le nombre de capteurs, en cas de réception d'une onde plane de fréquence égale à ladite fréquence porteuse et provenant d'une direction définie par un angle prédéterminé propre audit vecteur directionnel.

**26.** Procédé selon l'une des revendications 1, 13 et 25, **caractérisé en ce que**, pour élaborer chaque dite table de calibration en émission,

(bl) on forme une matrice où chaque colonne est un vecteur directionnel, dont la m$^{ème}$ composante représente le signal qui serait émis par le m$^{ème}$ capteur, m variant de 1 à N, où N est le nombre de capteurs, en cas d'émission d'une onde plane de fréquence égale à ladite fréquence porteuse dans une direction définie par un angle déterminé propre audit vecteur directionnel.

**27.** Procédé selon l'une quelconque des revendications 1, 13, 25 et 26, **caractérisé en ce que**

(c1) ledit opérateur effectue une transformation approximative au sens de l'approximation des moindres carrés.

**28.** Procédé selon l'une quelconque des revendications 1, 13 et 25 à 27, **caractérisé en ce que**

(d1) on calcule des dites données statistiques d'ordre au moins 2.

**Patentansprüche**

1. Verfahren zum Senden eines digitalen Signals, bestehend aus aufeinanderfolgenden Rahmen von Abtastwerten, durch eine Basisstation, die mit einer Antenne mit mehreren Aufnehmern ausgestattet ist, an ein festgelegtes Mobilgerät in Anwesenheit von Störern und Hintergrundrauschen mit Hilfe wenigstens einer Empfangs-Trägerfrequenz und wenigstens einer Sende-Trägerfrequenz, bei dem:

   - vor dem Senden:

        (a) für jede Empfangs-Trägerfrequenz eine Empfangs-Kalibriertabelle aufgestellt wird, die für die Schwankung des Beitrages, je nach Empfangsrichtung, der verschiedenen Aufnehmer beim Empfang der Empfangs-Trägerfrequenz repräsentativ ist;

        (b) für jede Sende-Trägerfrequenz eine Sende-Kalibriertabelle aufgestellt wird, die für die Schwankung, je nach Senderichtung, des Beitrages der verschiedenen Aufnehmer beim Senden mit der Sende-Trägerfrequenz repräsentativ ist;

        (c) wenigstens ein Frequenzverschiebungsoperator berechnet wird, der eine besagte Empfangs-Kalibriertabelle näherungsweise in eine Sende-Kalibriertabelle umwandelt;

   - dann, beim Senden:

        (d) statistische Daten anhand von mehreren Abtastwerten von mehreren Rahmen der von den verschiedenen Aufnehmern von dem Mobilgerät und den Störern kommend empfangenen Signale berechnet werden;

        (e) für das Mobilgerät ein optimaler Satz von räumlichen Gewichtungen anhand der statistischen Daten, des oder der Frequenzumwandlungsoperatoren und eines Nutzsignalverstärkungs- und Störerdämpfungskriteriums berechnet wird;

        (f) die Beiträge jedes Aufnehmers zu dem zu sendenden digitalen Signal jeweils mit Gewichtungen gewichtet werden, die anhand der räumlichen Gewichtungen des optimalen Satzes erhalten werden;

        (g) das so gewichtete digitale Signal gesendet wird;

   wobei in dem Verfahren eine einzige Empfangs-Trägerfrequenz $f_1$ und eine einzige Sende-Trägerfrequenz $f_2$ verwendet wird, so dass in Schritt (c):

   - ein einziger Frequenzverschiebungs-Matrixoperator $T_{f1,f2}$ berechnet wird, der die der Frequenz $f_1$ zugeordnete Empfangs-Kalibriertabelle $C_1$ in die der Frequenz $f_2$ zugeordnete Sende-Kalibriertabelle $C_2$ umwandelt.

2. Verfahren nach Anspruch 1, **dadurch gekennzeichnet, dass**:

   (d1) für jeden Rahmen eines Satzes von M nicht notwendigerweise aufeinanderfolgenden, von der Antenne empfangenen Rahmen, wobei M klein genug ist, damit die Ankunftswinkel der von den Mobilgeräten kommenden Mehrfachwege an den verschiedenen Aufnehmern der Antenne stabil sind:

   - eine Matrix $\tilde{r}_{xx}{}^n = X_{f1}(t).X_{f1}{}^+(t)$ berechnet wird,
   - wobei $X_{f1}(t)$ ein Vektor mit N Komponenten ist, dessen m-te Komponente bei der Trägerfrequenz $f_1$ das zum Zeitpunkt t von den Mobilgeräten kommend von dem m-ten Aufnehmer der Antenne empfangene Signal darstellt, wobei m von 1 bis N variiert,

   wobei $(.)^+$ die konjugiert transponierte Matrix bezeichnet und
   wobei t eine Menge von Abtastwerten des Rahmens beschreibt, und

   - eine Matrix $\tilde{r}_{vv}{}^n$ anhand der Beiträge der Störer und des Untergrundrauschens an jedem der N Aufnehmer der Antenne oder anhand des von diesen Aufnehmern empfangenen Nutzsignals abgeschätzt wird; dann:

- der Mittelwert der M Matrizen $\tilde{R}_{xx}{}^n$ berechnet wird, um eine Autokorrelationsmatrix $R_{xx}{}^{f1}$ zu erhalten, die ein Schätzwert von $E(X_{f1}(t.X_{f1}{}^+(t))$ ist, wobei E den mathematischen Erwartungswert bezeichnet und

- der Mittelwert der M Matrizen $\tilde{R}_{vv}{}^n$ berechnet wird, um eine Autokorrelationsmatrix $R_{vv}{}^{f1}$ zu erhalten, die einen Schätzwert für $E(V_{f1}(t) \cdot V_{f1}{}^+(t))$ ist, wobei $V_{f1}(t)$ ein Vektor mit N Komponenten ist, dessen m-te Komponente bei der Trägerfrequenz $f_1$ den Beitrag der Störer und des Untergrundrauschens am m-ten Aufnehmer repräsentiert, wobei m von 1 bis N variiert.

3. Verfahren nach Anspruch 2, **dadurch gekennzeichnet, dass**
(e1) ein Vektor von räumlichen Gewichtungen $w_{f1}$ so berechnet wird, dass die Matrizen $R_{xx}{}^{f1}$, $R_{vv}{}^{f1}$ und der Vektor $W_{f1}$ ein geeignetes Nutzsignalverstärkungs- und Störerabschwächungskriterium erfüllen;
(e2) die Umkehrung des Frequenzverschiebungsoperators, mit $T_{f1,f2}{}^{-1}$ bezeichnet, auf den Gewichtungsvektor $W_{f1}$ angewendet wird, um besagten optimalen Satz von räumlichen Gewichtungen in Form eines Vektors $w_{f2} = T_{f1,f2}{}^{-1}.w_{f1}$ zu erhalten;
(f1) für m von 1 bis N das Signal, das von dem m-ten Aufnehmer der Antenne an das Mobilgerät gesendet werden soll, mit der m-ten Komponente des transponierten konjugierten optimalen Gewichtungsvektors $w_{f2}{}^+$ multipliziert wird.

4. Verfahren nach Anspruch 3, bei dem die Autokorrelationsmatrix $R_{vv}{}^{f1}$ anhand der Beiträge der Störer und des Hintergrundrauschens an den verschiedenen Aufnehmern der Antenne aufgestellt wird, **dadurch gekennzeichnet, dass**
(e11) das Kriterium darin beruht, als Gewichtungsvektor $w_{f1}$ den Vektor $w_{f1}$ zu wählen, der das Verhältnis $(w_{f1}{}^+.R_{vv}{}^{f1}\cdot w_{f1}) / (w_{f1}{}^+\cdot R_{xx}{}^{f1}.w_{f1})$ minimal macht.

5. Verfahren nach Anspruch 3, bei dem die Autokorrelationsmatrix $R_{vv}{}^{f}$ anhand des von den verschiedenen Aufnehmern der Antenne empfangenen Nutzsignals aufgestellt wird, **dadurch gekennzeichnet, dass**
(e11) das Kriterium darin beruht, als Gewichtungsvektor $w_{f1}$ den Vektor $w_{f1}$ zu wählen, der das Verhältnis $(w_{f1}{}^+.R_{vv}{}^{f1}\cdot w_{f1}) / (w_{f1}{}^+.R_{xx}{}^{f1}.w_{f1})$ maximal macht.

6. Verfahren nach Anspruch 2, **dadurch gekennzeichnet, dass**
(e1) der Frequenzverschiebungsoperator $T_{f1,f2}$ auf die Matrix $R_{xx}{}^{f1}$ angewendet wird, um eine Matrix $R_{xx}{}^{f2}=T_{f1,f2}\cdot R_{xx}{}^{f1}.T_{f1,f2}{}^+$ zu erhalten;
(e2) der Frequenzverschiebungsoperator $T_{f1,f2}$ auf die Matrix $R_{vv}{}^{f1}$ angewandt wird, um eine Matrix $R_{vv}{}^{f2}=T_{f1,f2}\cdot R_{vv}{}^{f1}.T_{f1,f2}{}^+$ zu erhalten;
(e3) der optimale Satz von räumlichen Gewichtungen in Form eines Vektors $w_{f2}$ so berechnet wird, dass die Ma-trizen $R_{xx}{}^{f2}$, $R_{vv}{}^{f2}$ und der Vektor $W_{f2}$ ein geeignetes Nutzsignalverstärkungsund Störerdämpfungskriterium erfüllen;
(f1) für m von 1 bis N das von dem m-ten Aufnehmer der Antenne an das Mobilgerät zu sendende Signal mit der m-ten Komponente des transponierten konjugierten optimalen Gewichtungsvektors $w_{f2}{}^+$ multipliziert wird.

7. Verfahren nach Anspruch 6, bei dem die Autokorrelationsmatrix $R_{vv}{}^{f1}$ anhand der Beiträge der Störer und des Untergrundrauschens an den verschiedenen Aufnehmern der Antenne aufgestellt wird, **dadurch gekennzeichnet, dass**
(e33) das Kriterium darin beruht, als Gewichtungsvektor $w_{f2}$ den Vektor $w_{f2}$ zu wählen, der das Verhältnis $(w_{f2}{}^+.R_{vv}{}^{f2}.w_{f2})/(w_{f2}{}^+.R_{xx}{}^{f2}.w_{f2})$ minimal macht.

8. Verfahren nach Anspruch 6, bei dem die Autokorrelationsmatrix $R_{vv}{}^{f1}$ anhand des von den verschiedenen Aufnehmern der Antenne empfangenen Nutzsignals aufgestellt wird, **dadurch gekennzeichnet, dass**
(e33) das Kriterium darin beruht, als Gewichtungsvektor $w_{f2}$ den Vektor $w_{f2}$ zu wählen, der das Verhältnis $(w_{f2}{}^+.R_{vv}{}^{f2}.w_{f2})/(w_{f2}{}^+.R_{xx}{}^{f2}.w_{f2})$ maximal macht.

9. Verfahren nach Anspruch 2 in Gegenwart von P Mobilgeräten, darunter einem Nutz-Mobilgerät, mit dem die Kommunikation herzustellen ist, wobei die P-1 anderen Mobilgeräte Störer darstellen, bei dem die Matrix $\tilde{R}_{vv}{}^n$ anhand der Beiträge der Störer und des Untergrundrauschens an den verschiedenen Aufnehmern der Antenne aufgestellt wird, **dadurch gekennzeichnet, dass** zum Abschätzen der Matrix $\tilde{R}_{vv}{}^n$
(d11) für k von 1 bis P und m von 1 bis N die Impulsantwort $\{g_{k,m,l}, ..., g_{k,m,L}\}$, wobei L eine ganze Zahl ist, des Ausbreitungskanals bestimmt wird, der das k-te Mobilgerät mit dem m-ten Aufnehmer der Antenne verbindet;
(d12) räumliche Korrelationsmatrizen mit N Zeilen und N Spalten

$$\sum_{\substack{k=1 \\ k \neq j}}^{P} \sum_{i=1}^{L} G_{k,i}.G_{k,i}^{+}$$

aufgestellt werden, wobei das j-te Mobilgerät das Nutz-Mobilgerät ist,

$G_{ki}$ der Spaltenvektor $\{g_{k,l,i}, ..., g_{k,N,i}\}^T$ ist und

$(.)^T$ die transponierte Matrix bezeichnet;

(d13) der Mittelwert dieser räumlichen Korrelationsmatrizen auf einer vorgegebenen Zahl von Rahmen des Signals gebildet wird;

(d14) für m von 1 bis N die Varianz $\sigma_{l,m}^2$ des Untergrundrauschens am m-ten Aufnehmer abgeschätzt wird;

(d15) die in Schritt (d13) erhaltene mittlere Matrix und eine Diagonalmatrix addiert werden, bei der für m von 1 bis N der sich auf der m-ten Linie und der m-ten Spalte befindliche Term die Varianz $\sigma_{l,m}^2$ ist, und wobei die erhaltene Summenmatrix die Matrix $\tilde{R}_{vv}^{n}$ darstellt.

10. Verfahren nach Anspruch 2, bei dem die Matrix $\tilde{R}_{vv}^{n}$ anhand der Beiträge der Störer und des Untergrundrauschens an den verschiedenen Aufnehmern der Antenne aufgestellt wird, **dadurch gekennzeichnet, dass** zum Abschätzen der Matrix $\tilde{R}_{vv}^{n}$

(d11) mit Hilfe einer Trainingssequenz von $L_{ref}$ Abtastwerten für m von 1 bis N im Sinne der Kleinste-Quadrate-Näherung die Impulsantwort des Ausbreitungskanals abgeschätzt wird, der das Mobilgerät mit dem m-ten Aufnehmer der Antenne verbindet,

wobei der Rest $b_m$ dieser Abschätzung ein Spaltenvektor ist, der einen Schätzwert für den Beitrag der Störer und des Untergrundrauschens am m-ten Aufnehmer darstellt;

(d12) die Matrix B gebildet wird, die als Zeilen die N Vektoren $b_m^T$ hat;

(d13) der Ausdruck $(1/L_B).B.B^+$ gebildet wird, wobei $L_B$ die Zahl von Spalten der Matrix B bezeichnet und die erhaltene Matrix die Matrix $\tilde{R}_{vv}^{n}$ bildet.

11. Verfahren nach Anspruch 2, bei dem die Matrix $\tilde{R}_{vv}^{n}$ anhand des von den verschiedenen Aufnehmern der Antenne empfangenen Nutzsignals aufgestellt wird, **dadurch gekennzeichnet, dass** zum Abschätzen der Matrix $\tilde{R}_{vv}^{n}$

(d11) für m von 1 bis N die Impulsantwort $\{g_{m,l}, ..., g_{m,L}\}$,

wobei L eine ganze Zahl ist, des Ausbreitungskanals bestimmt wird, der das Mobilgerät mit dem m-ten Aufnehmer der Antenne verbindet;

(d12) räumliche Korrelationsmatrizen mit N Zeilen und N Spalten

$$\sum_{i=1}^{L} G_i.G_i^{+}$$

gebildet werden, wobei $G_i$ der Spaltenvektor $[g_{l,i}, ..., g_{N,i}]^T$ ist

(d13) der Mittelwert dieser räumlichen Korrelationsmatrizen über eine vorgegebene Zahl von Rahmen des Signals gebildet wird, wobei die erhaltene Matrix die Matrix $\tilde{R}_{vv}^{n}$ bildet.

12. Verfahren nach Anspruch 2, bei dem die Matrix $\tilde{R}_{vv}^{n}$ anhand des von den verschiedenen Aufnehmern der Antenne empfangenen Nutzsignals aufgestellt wird, **dadurch gekennzeichnet, dass** zum Abschätzen der Matrix $\tilde{R}_{vv}^{n}$

(d11) mit Hilfe einer Trainingssequenz von $L_{ref}$ Abtastwerten für m von 1 bis N im Sinne der Kleinste-Quadrate-Näherung die Impulsantwort $\{g_{m,l}, ..., g_{m,l}\}$, wobei L eine ganze Zahl ist, des Ausbreitungskanals abgeschätzt wird, der das Mobilgerät mit dem m-ten Aufnehmer der Antenne verbindet;

(d12) räumliche Korrelationsmatrizen mit N Zeilen und N Spalten

$$\sum_{i=1}^{L} G_i.G_i^{+}$$

gebildet werden, wobei $G_i$ der Spaltenvektor $[g_{l,i}, ..., g_{N,i}]^T$ ist;

(d13) der Mittelwert dieser räumlichen Korrelationsmatrizen über eine vor gegebene Zahl von Rahmen des Signals gebildet wird, wobei die erhaltene Matrix die Matrix $\tilde{R}_w^{\,n}$ bildet.

13. Verfahren zum Senden eines aus aufeinanderfolgenden Rahmen von Abtastwerten gebildeten digitalen Signals durch eine mit einer Antenne mit mehreren Aufnehmern ausgestattete Basisstation zu einem vorgegebenen Mobilgerät in Anwesenheit von Störern und von Untergrundrauschen mit Hilfe wenigstens einer Empfangs-Trägerfrequenz und wenigstens einer Sende-Trägerfrequenz, bei dem:

- vor dem Senden:

  (a) für jede Empfangs-Trägerfrequenz eine Empfangs-Kalibriertabelle aufgestellt wird, die für die Schwankung des Beitrages, je nach Empfangsrichtung, der verschiedenen Aufnehmer beim Empfang der Empfangs-Trägerfrequenz repräsentativ ist,

  (b) für jede Sende-Trägerfrequenz eine Sende-Kalibriertabelle aufgestellt wird, die für die Schwankung des Beitrages, je nach Senderichtung, der verschiedenen Aufnehmer beim Senden mit der Sende-Trägerfrequenz repräsentativ ist;

  (c) wenigstens ein Frequenzverschiebungsoperator berechnet wird, der näherungsweise eine besagte Empfangs-Kalibriertabelle in eine Sende- oder Empfangs-Kalibriertabelle umwandelt;

- dann, beim Senden:

  (d) statistische Daten anhand von mehreren Abtastwerten von mehreren Rahmen der von den verschiedenen Aufnehmern von dem Mobilgerät und den Störern kommend empfangenen Signale berechnet werden;

  (e) für das Mobilgerät ein optimaler Satz von räumlichen Gewichtungen anhand der statistischen Daten des oder der Frequenzverschiebungsoperatoren und eines Nutzsignalverstärkungsund Störerdämpfungskriteriums berechnet wird;

  (f) die Beiträge jedes Aufnehmers zu dem zu sendenden digitalen Signal jeweils mit Gewichtungen gewichtet werden, die anhand der räumlichen Gewichtungen des optimalen Satzes erhalten werden;

  (g) das so gewichtete digitale Signal gesendet wird,

wobei bei dem Verfahren mehrere Empfangs-Trägerfrequenzen $f_{qr}$ und mehrere Sende-Trägerfrequenzen $f_{qe}$ verwendet werden und jeder Rahmen des digitalen Signals mit Hilfe einer bis auf eine periodische Wiederkehr unterschiedlichen Trägerfrequenz gesendet wird, so dass in Schritt a):

  (a1) ferner für eine willkürlich gewählte Empfangs-Trägerfrequenz $f_{q0r}$ eine Empfangs-Kalibriertabelle $C_{q0r}$ aufgestellt wird, die für die Schwankung des Beitrages, je nach Empfangsrichtung, der verschiedenen Aufnehmer beim Empfang der Empfangs-Trägerfrequenz $f_{q0r}$ repräsentativ ist;
  und in Schritt c)

  (c1) für jede besagte Empfangs-Trägerfrequenz $f_{qr}$ ein matrixartiger Frequenzverschiebungsoperator $T_{f_{qr} \cdot f_{q0r}}$ berechnet wird, der die der Frequenz $f_{qr}$ zugeordnete Empfangs-Kalibriertabelle in die der Frequenz $f_{q0r}$ zugeordnete Empfangs-Kalibriertabelle $C_{q0r}$ umwandelt;

  (c2) für jede besagte Sende-Trägerfrequenz $f_{qe}$ ein matrixartiger Frequenzverschiebungsoperator $T_{f_{q0r} \cdot f_{qe}}$ berechnet wird, der die der Frequenz $f_{q0r}$ zugeordnete Kalibriertabelle $C_{q0r}$ in die der Frequenz $f_{qe}$ zugeordnete Empfangs-Kalibriertabelle $C_{qe}$ umwandelt.

14. Verfahren nach Anspruch 13, **dadurch gekennzeichnet, dass**:
  (d1) für jeden Rahmen eines Satzes von K nicht notwendigerweise aufeinanderfolgenden, von der Antenne empfangenen Rahmen,
  wobei K klein genug ist, damit die Eintreffwinkel der von dem Mobilgerät kommenden Mehrfachwege an den verschiedenen Aufnehmern der Antenne stabil sind,

- eine Matrix $\tilde{R}_{xx}^{fqr} = X_{fqr}(t).X_{fqr}^{+}(t)$ berechnet wird,

wobei $X_{fqr}(t)$ ein Vektor mit N Komponenten ist, dessen m-te Komponente bei der Trägerfrequenz $f_{qr}$ das zum Zeitpunkt t von dem Mobilgerät kommend vom m-ten Aufnehmer der Antenne empfangene Signal für m von 1 bis N darstellt, und
t einen Satz von Abtastwerten des Rahmens beschreibt,

- eine Matrix $\tilde{R}_{vv}^{fqr}$ anhand der Beiträge der Störer und des Untergrundrauschens an jedem der N Aufnehmer der Antenne oder anhand des von diesen Aufnehmern empfangenen Nutzsignals abgeschätzt wird; dann
- der Mittelwert der K Matrizen $\tilde{R}_{xx}^{fqr}$ berechnet wird, um eine Autokorrelationsmatrix $R_{xx}^{fqr}$ zu erhalten, die ein Schätzwert für $E(X_{fqr}(t).X_{fqr}^{+}(t))$ ist, und
- der Mittelwert der M Matrizen $\tilde{R}_{vv}^{fqr}$ berechnet wird, um eine Autokorrelationsmatrix $R_{vv}^{fqr}$ zu erhalten, die ein Schätzwert für $E(V_{fqr}(t).V_{fqr}^{+}(t))$ ist, wobei $V_{fqr}(t)$ ein Vektor mit N Komponenten ist, dessen m-te Komponente bei der Trägerfrequenz $f_{qr}$ den Beitrag der Störer und des Untergrundrauschens am m-ten Aufnehmer der Antenne oder das von diesem Aufnehmer empfangene Signal für m von 1 bis N darstellt.

15. Verfahren nach Anspruch 14 in Anwesenheit von P Mobilgeräten, darunter ein Nutz-Mobilgerät, mit dem die Kommunikation herzustellen ist, wobei die P-1 anderen Mobilgeräte Störer bilden, bei welchem die Matrix $\tilde{R}_{vv}^{fqr}$ anhand der Beiträge der Störer und des Untergrundrauschens an den verschiedenen Aufnehmern der Antenne aufgestellt wird, **dadurch gekennzeichnet, dass** zum Abschätzen der Matrix $\tilde{R}_{vv}^{fqr}$
(d11) für k von 1 bis P und m von 1 bis N die Impulsantwort $\{g_{k,m,l}, \cdots, g_{k,m,L}\}$, wobei L eine ganze Zahl ist, des Ausbreitungskanals bestimmt wird, der das k-te Mobilgerät mit dem m-ten Aufnehmer der Antenne verbindet;
(d12) räumliche Korrelationsmatrizen mit N Zeilen und N Spalten

$$\sum_{\substack{k=1 \\ k \neq j}}^{P} \sum_{i=1}^{L} G_{k,i}.G_{k,i}^{+}$$

gebildet werden, wobei das j-te Mobilgerät das Nutz-Mobilgerät ist, $G_{k,i}$ der Spaltenvektor $[g_{k,l,i}, ..., g_{k,N,i}]^{T}$ ist und $(.)^{T}$ die transponierte Matrix bezeichnet;
(d13) der Mittelwert dieser räumlichen Korrelationsmatrizen über eine vorgegebene Zahl von Rahmen des Signals gebildet wird;
(d14) für m von 1 bis N die Varianz $\sigma_{l,m}^{2}$ des Untergrundrauschens am m-ten Aufnehmer gebildet wird;
(d15) die in Schritt (d13) erhaltene mittlere Matrix und eine Diagonalmatrix addiert werden, bei der für m von 1 bis N der auf der m-ten Zeile und in der m-ten Spalte liegende Term die Varianz $\sigma_{l,m}^{2}$ ist, und die erhaltene Summenmatrix die Matrix $\tilde{R}_{vv}^{fqr}$ bildet.

16. Verfahren nach Anspruch 14, bei dem die Matrix $R_{vv}^{fqr}$ anhand der Beiträge der Störer und des Untergrundrauschens an den verschiedenen Aufnehmern der Antenne aufgestellt wird, **dadurch gekennzeichnet, dass** zum Abschätzen der Matrix $\tilde{R}_{vv}^{fqr}$
(d11) mit Hilfe einer Trainingssequenz von $L_{ref}$ Abtastwerten für m von 1 bis N im Sinne der Kleinste-Quadrate-Näherung die Impulsantwort des Kanals abgeschätzt wird, der das Mobilgerät mit dem m-ten Aufnehmer der Antenne verbindet, wobei der Rest $b_{m}$ dieser Abschätzung ein Spaltenvektor ist, der einen Schätzwert für den Beitrag der Störer und des Untergrundrauschens am m-ten Aufnehmer bildet;
(d12) die Matrix B gebildet wird, die als Zeilen die N Vektoren $b_{m}^{T}$ hat;
(d13) der Ausdruck $(1/L_{B}).B.B^{+}$ berechnet wird, wobei $L_{B}$ die Zahl von Spalten der Matrix B bezeichnet und die erhaltene Matrix die Matrix $\tilde{R}_{vv}^{fqr}$ darstellt.

17. Verfahren nach Anspruch 14, bei dem die Matrix $\tilde{R}_{vv}^{fqr}$ anhand des von den verschiedenen Aufnehmern der Antenne empfangenen Nutzsignals aufgestellt wird, **dadurch gekennzeichnet, dass** zum Abschätzen der Matrix $\tilde{R}_{vv}^{fqr}$
(d11) für m von 1 bis N die Impulsantwort $\{g_{m,l}, ..., g_{m,L}\}$, wobei L eine ganze Zahl ist, des Ausbreitungskanals bestimmt wird, der das Mobilgerät mit dem m-ten Aufnehmer der Antenne verbindet;
(d12) räumliche Korrelationsmatrizen mit N Zeilen und N Spalten

$$\sum_{i=1}^{L} G_i . G_i^{+}$$

gebildet werden, wobei $G_i$ der Spaltenvektor $[g_{l,i}, ..., g_{N,i}]^T$ ist;

(d13) der Mittelwert dieser räumlichen Korrelationsmatrizen über eine vorgegebene Zahl von Rahmen des Signals gebildet wird, wobei die erhaltene Matrix die Matrix $\tilde{R}_{vv}^{fqr}$ bildet.

18. Verfahren nach Anspruch 14, bei dem die Matrix $\tilde{R}_{vv}^{fqr}$ anhand des von den verschiedenen Aufnehmern der Antenne empfangenen Nutzsignals aufgestellt wird, **dadurch gekennzeichnet, dass** zum Abschätzen der Matrix $\tilde{R}_{vv}^{fqr}$

(d11) mit Hilfe einer Trainingssequenz von $L_{ref}$ Abtastwerten für m von 1 bis N im Sinne der Kleinste-Quadrate-Näherung die Impulsantwort $\{g_{m,l}, ..., g_{m,l}\}$, wobei L eine ganze Zahl ist, des Ausbreitungskanals abgeschätzt wird, der das Mobilgerät mit dem m-ten Aufnehmer der Antenne verbindet;

(d12) räumliche Korrelationsmatrizen mit N Zeilen und N Spalten

$$\sum_{i=1}^{L} G_i . G_i^{+}$$

gebildet werden, wobei $G_i$ der Spaltenvektor $[g_{l,i}, ..., g_{N,i}]^T$ ist;

(d13) der Mittelwert dieser räumlichen Korrelationsmatrizen über eine vorgegebene Zahl von Rahmen des Signals gebildet wird, wobei die erhaltene Matrix die Matrix $\tilde{R}_{vv}^{fqr}$ bildet.

19. Verfahren nach Anspruch 14, **dadurch gekennzeichnet, dass**

(e1) für die Empfangs-Trägerfrequenz $f_{q0r}$ ein Vektor von räumlichen Gewichtungen $w_{fq0r}$ so berechnet wird, dass die Matrizen $R_{xx}^{fq0r}$, $R_{vv}^{fq0r}$ und der Vektor $W_{fq0r}$ ein geeignetes Nutzsignalverstärkungs- und Störerdämpfungskriterium erfüllen;

(e2) für jede Sende-Trägerfrequenz $f_{qe}$ die Umkehrung des Frequenzverschiebungsoperators, mit $T_{fq0r, fge}^{-1}$ bezeichnet, auf den Gewichtungsvektor $w_{fq0r}$ angewendet wird, um den optimalen Satz von räumlichen Gewichtungen in Form eines Vektors $w_{fqe} = T_{fq0rfge}^{-1} . W_{fq0r}$ zu erhalten;

(f1) für m von 1 bis N das auf der Sende-Trägerfrequenz $f_{qe}$ von dem m-ten Aufnehmer der Antenne an das Mobilgerät zu sendende Signal mit der m-ten Komponente des optimalen transponierten konjugierten Gewichtungsvektors $w_{qe}^{+}$ multipliziert wird.

20. Verfahren nach Anspruch 19, bei dem die Autokorrelationsmatrix $R_{vv}^{fqr}$ anhand der Beiträge der Störer und des Untergrundrauschens an den verschiedenen Aufnehmern der Antenne aufgestellt wird, **dadurch gekennzeichnet, dass**

(e11) das Kriterium darin beruht, für einen Gewichtungsvektor $w_{fq0r}$ den Vektor $w_{fq0r}$ zu wählen, der das Verhältnis $(w_{fq0r}^{+} . R_{vv}^{fq0r} . w_{fq0r}) / (w_{fq0r}^{+} . R_{xx}^{fq0r} . w_{fq0r})$ minimal macht.

21. Verfahren nach Anspruch 19, bei dem die Autokorrelationsmatrix $R_{vv}^{fqr}$ anhand des von den verschiedenen Aufnehmern der Antenne empfangenen Nutzsignals aufgestellt wird, **dadurch gekennzeichnet, dass**

(e11) das Kriterium darin beruht, als Gewichtungsvektor $W_{fq0r}$ den Vektor $w_{fq0r}$ zu wählen, der das Verhältnis $(w_{fq0r}^{+} . R_{vv}^{fq0r} . w_{fq0r}) / (w_{fq0r}^{+} . R_{xx}^{fq0r} . w_{fq0r})$ maximal macht.

22. Verfahren nach Anspruch 14, **dadurch gekennzeichnet, dass**

(e1) auf die K Matrizen $\tilde{R}_{xx}^{fqr}$ die entsprechenden K Frequenzverschiebungsoperatoren $T_{fqr, fq0r}$ angewandt werden, um. $\tilde{R}_{xx}^{fq0r} = T_{fqr, fq0r} . \tilde{R}_{xx}^{fqr} . T_{fqr,fq0r}^{+}$ zu erhalten;

(e2) die K Frequenzverschiebungsoperatoren $T_{fqr,fq0r}$ jeweils auf die K Matrizen $\tilde{R}_{vv}^{fqr}$ angewandt werden, um K Matrizen $\tilde{R}_{vv}^{fq0r} = T_{fqr,fq0r} . \tilde{R}_{vv}^{fqr} . T_{fqr,fq0r}^{+}$ zu erhalten;

(e3) der Mittelwert $R_{xx}^{fq0r}$ der K Matrizen $\tilde{R}_{xx}^{fqr}$ und der Mittelwert $R_{vv}^{fq0r}$ der K Matrizen $\tilde{R}_{vv}^{fq0r}$ berechnet wird;

(e4) für jede Sende-Trägerfrequenz $f_{qe}$ der Frequenzverschiebungsoperator $T_{fq0r,fqe}$ auf die mittlere Matrix $R_{xx}^{fq0r}$ angewandt wird, um eine Matrix $R_{xx}^{fqe} = T_{fq0r,fqe} . R_{xx}^{fq0r} . T_{fq0r,fqe}^{+}$ zu erhalten;

(e5) für jede Sende-Trägerfrequenz $f_{qe}$ der Frequenzverschiebungsoperator auf die mittlere Matrix $R_{vv}^{fq0r}$ ange-

wandt wird, um eine Matrix $R_{vv}^{fqe} = T_{fq0r,fqe} \cdot R_{vv}^{fq0r} \cdot T_{fq0r,fqe}^+$ zu erhalten;

(e6) für jede Sende-Trägerfrequenz $f_{qe}$ der optimale Satz von räumlichen Gewichtungen in Form eines Vektors $W_{fqe}$ so berechnet wird, dass die Matrizen $R_{xx}^{fqe}$, $R_{vv}^{fqe}$ und der Vektor $W_{fqe}$ ein geeignetes Nutzsignalverstärkungs- und Störerdämpfungskriterium erfüllen;

($f_1$) für m von 1 bis N das auf der Sende-Trägerfrequenz $f_{qe}$ von dem m-ten Aufnehmer der Antenne an das Mobilgerät zu sendende Signal mit der m-ten Komponente des konjugiert transponierten optimalen Gewichtungsvektors $W_{fqe}^+$ multipliziert wird.

**23.** Verfahren nach Anspruch 22, bei dem die Autokorrelationsmatrix $R_{vv}^{fqr}$ anhand der Beiträge der Störer und des Untergrundrauschens an den verschiedenen Aufnehmern der Antenne aufgestellt wird, **dadurch gekennzeichnet, dass**

(e61) das Kriterium darin beruht, als Gewichtungsvektor $W_{fqe}$ den Vektor $w_{fqe}$ zu wählen, der das Verhältnis $(w_{fqe}^+ \cdot R_{vv}^{fqe} \cdot w_{fqe}) / (w_{fqe}^+ \cdot R_{xx}^{fqe} \cdot w_{fqe})$ minimal macht.

**24.** Verfahren nach Anspruch 22, bei dem die Autokorrelationsmatrix $R_{vv}^{fqr}$ anhand des von den verschiedenen Aufnehmern der Antenne empfangenen Nutzsignals aufgestellt wird, **dadurch gekennzeichnet, dass**

(e61) das Kriterium darin beruht, als Gewichtungsvektor $w_{fqe}$ den Vektor $w_{fqe}$ zu wählen, der das Verhältnis $(v_{fqe}^+ \cdot R_{vv}^{fqe} \cdot w_{fqe}) / (w_{fqe}^+ \cdot R_{xx}^{fqe} \cdot w_{fqe})$ maximal macht.

**25.** Verfahren nach einem der Ansprüche 1 und 13, **dadurch gekennzeichnet, dass** zum Aufstellen besagter Empfangs-Kalibriertabelle

(a1) eine Matrix gebildet wird, bei der jede Spalte ein Richtvektor ist, dessen m-te Komponente das Signal darstellt, das vom m-ten Aufnehmer, wobei m von 1 bis N variiert und N die Zahl von Aufnehmern ist, in dem Fall empfangen würde, dass eine ebene Welle mit Frequenz gleich der Trägerfrequenz und kommend aus einer Richtung, die durch einen vorgegebenen, dem Richtvektor eigentümlichen Winkel definiert ist, empfangen würde.

**26.** Verfahren nach einem der Ansprüche 1, 13 und 25, **dadurch gekennzeichnet, dass** zum Aufstellen jeder besagter Sende-Kalibriertabelle

(b1) eine Matrix gebildet wird, bei der jede Spalte ein Richtvektor ist, dessen m-te Komponente das Signal darstellt, das von dem m-ten Aufnehmer, wobei m von 1 bis N variiert und N die Zahl der Aufnehmer ist, in dem Fall gesendet würde, dass eine ebene Welle mit einer Frequenz gleich der Trägerfrequenz in eine Richtung gesendet würde, die durch einen vorgegebenen, dem Richtvektor eigentümlichen Winkel definiert ist.

**27.** Verfahren nach einem der Ansprüche 1, 13, 25 und 26, **dadurch gekennzeichnet, dass**

(c1) der Operator eine angenäherte Umwandlung im Sinne der Kleinste-Quadrate-Näherung durchführt;

**28.** Verfahren nach einem beliebigen Ansprüche 1, 13 und 25 bis 27, **dadurch gekennzeichnet, dass**

(d1) die statistischen Daten wenigstens mit der Ordnung 2 berechnet werden.

**Claims**

**1.** Method for transmitting a digital signal composed of successive frames of samples, by a base station equipped with a multi-element antenna to a specific mobile, in the presence of interference sources and background noise, with the aid of at least one reception carrier frequency and at least one transmission carrier frequency, according to which:

- prior to sending:

(a) for each reception carrier frequency, a reception calibration table is developed, representing the variation in contribution, as a function of the reception direction, of the various reception elements at the said reception carrier frequency;

(b) for each transmission carrier frequency, a transmission calibration table is developed, representing the variation in contribution, as a function of the transmission direction, of the various transmission elements at the said transmission carrier frequency;

(c) at least one frequency transposition operator is calculated which approximately transforms one said reception calibration table into one said transmission calibration table;

- then, during sending:

(d) statistical data are calculated on the basis of a plurality of samples of a plurality of frames of the signals received by the various elements, originating from the mobile and the interference sources;
(e) for the said mobile, an optimum set of weightings is calculated on the basis of the said statistical data, the said frequency transposition operator or operators, and a criterion for reinforcing the useful signal and reducing the interference sources;
(f) the contributions to the said digital signal to be transmitted by each element are respectively weighted by the weightings obtained on the basis of the spatial weightings of the said optimum set; and
(g) the said digital signal thus weighted is transmitted,

said method employing a single reception carrier frequency $f_1$ and a single transmission carrier frequency $f_2$, so that, at step c) :
- a single frequency transposition matrix operator $T_{f1,f2}$ is calculated which transforms the reception calibration table $C_1$ associated with the frequency $f_1$ into the transmission calibration table $C_2$, associated with the frequency $f_2$.

2. Method according to claim 1, wherein:

(d1) for each frame of a set of M, not necessarily consecutive, frames received by the antenna, M being small enough for the angles of arrival, on the various elements of the antenna, of the multiple paths originating from the mobiles to be stable:

- a matrix $\tilde{R}_{xx}^{f1} = X_{f1}(t).X_{f1}^{+}(t)$ is calculated,

in which $X_{f1}(t)$ is a vector having N components in which the $m^{th}$ component represents, at the carrier frequency $f_1$, the signal received at time t for m varying from 1 to N,
in which $(.)^{+}$ denotes the conjugate transpose matrix, and
in which t describes a set of samples of the said frame, and

- a matrix $\tilde{R}_{vv}^{f1}$ is estimated, either on the basis of the contributions of the interference sources and in the background noise on each of the N elements of the antenna, or on the basis of the useful signal received by these elements; then:

- the mean of the said M matrices $\tilde{R}_{xx}^{f1}$ is calculated so as to obtain an autocorrelation matrix $R_{xx}^{f1}$ which is an estimate of $E(X_{f1}(t).X_{f1}^{+}(t))$, in which E denotes the mathematical expectation, and
- the mean of the said M matrices $\tilde{R}_{vv}^{f1}$ is calculated so as to obtain an autocorrelation matrix $R_{vv}^{f1}$, which is an estimate of $E(V_{f1}(t).V_{f1}^{+}(t))$, in which $V_{f1}(t)$ is a vector having N components in which the $m^{th}$ component represents, at the carrier frequency $f_1$, either the contribution of the interference sources and the background noise on the $m^{th}$ element of the antenna, or the useful signal received by this element, for m varying from 1 to N.

3. Method according to claim 2, wherein
(e1) a spatial weighting vector $w_{f1}$ is calculated so that the matrices $R_{xx}^{f1}$, $R_{vv}^{f1}$ and the vector $w_{f1}$ satisfy a suitable criterion for reinforcing the useful signal and reducing the interference sources;
(e2) the inverse, denoted $T_{f1,f2}^{-1}$, of the frequency transposition operator is applied to the weighting vector $w_{f1}$ so as to obtain the said optimum set of spatial weightings in the form of a vector $w_{f2} = T_{f1,f2}^{-1}.W_{f1}$;
(f1) for m varying from 1 to N, the signal to be transmitted by the $m^{th}$ element of the antenna to the mobile is multiplied by the $m^{th}$ component of the conjugate transposed optimum weighting vector $w_{f2}^{+}$.

4. Method according to claim 3, in which the autocorrelation matrix $R_{vv}^{f1}$ is established on the basis of the contributions of the interference sources and the background noise on the various elements of the antenna, wherein
(e11) the said criterion consists in choosing for the weighting vector $w_{f1}$ the vector $w_{f1}$ which minimizes the ratio $(w_{f1}^{+}.R_{vv}^{f1}.w_{f1})/(w_{f1}^{+}.R_{xx}^{f1}.w_{f1})$.

5. Method according to claim 3, in which the autocorrelation matrix $R_{vv}^{f1}$ is established on the basis of the useful signal received by the various elements of the antenna, wherein
(e11) the said criterion consists in choosing for the weighting vector $w_{f1}$ the vector $w_{f1}$ which maximizes the

ratio $(w_{f1}^+.R_{vv}^{f1}.w_{f1})/(w_{f1}^+.R_{xx}^{f1}.w_{f1})$.

6. Method according to claim 2, wherein
   (e1) the frequency transposition operator $T_{f1,f2}$ is applied to the matrix $R_{xx}^{f1}$ so as to obtain a matrix $R_{xx}^{f2} = T_{f1,f2}.R_{xx}^{f1}.T_{f1,f2}^+$;
   (e2) the frequency transposition operator $T_{f1,f2}$ is applied to the matrix $R_{vv}^{f1}$ so as to obtain a matrix $R_{vv}^{f2} = T_{f1,f2}.R_{vv}^{f1}.T_{f1,f2}^+$ ;
   (e3) the said optimum set of spatial weightings is calculated in the form of a vector $w_{f2}$ so that the matrices $R_{xx}^{f2}$, $R_{vv}^{f2}$ and the vector $w_{f2}$ satisfy a suitable criterion for reinforcing the useful signal and reducing the interference sources;
   (f1) for m varying from 1 to N, the signal to be transmitted by the $m^{th}$ element of the antenna to the mobile is multiplied by the $m^{th}$ component of the conjugate transposed optimum weighting vector $w_{f2}^+$.

7. Method according to claim 6, in which the autocorrelation matrix $R_{vv}^{f1}$ is established on the basis of the contributions of the interference sources and the background noise on the various elements of the antenna, wherein
   (e33) the said criterion consists in choosing for the optimum weighting vector $w_{f2}$ the vector $w_{f2}$ which minimizes the ratio $(w_{f2}^+.R_{vv}^{f2}.w_{f2})/(w_{f2}^+.R_{xx}^{f2}.w_{f2})$.

8. Method according to claim 6, in which the autocorrelation matrix $R_{vv}^{f1}$ is established on the basis of the useful signal received by the various elements of the antenna, wherein
   (e33) the said criterion consists in choosing for the optimum weighting vector $w_{f2}$ the vector $w_{f2}$ which maximizes the ratio $(w_{f2}^+.R_{vv}^{f2}.w_{f2}) / (w_{f2}^+.R_{xx}^{f2}.w_{f2})$.

9. Method according to claim 2 in the presence of P mobiles containing a useful mobile with which communication is to be established, the other P-1 mobiles constituting the interference sources, in which the matrix $\tilde{R}_{vv}^{f1}$ is established on the basis of the contributions of the interference sources and the background noise on the various elements of the antenna, wherein, in order to estimate the matrix $\tilde{R}_{vv}^{f1}$,
   (d11) the impulse response $\{g_{k,m,1,...}, g_{k,m,L}\}$, in which L is an integer, of the propagation channel connecting the $k^{th}$ mobile to the $m^{th}$ element of the antenna, is determined for k varying from 1 to P and m varying from 1 to N;
   (d12) spatial correlation matrices having N rows and N columns

$$\sum_{\substack{k=1 \\ k \neq j}}^{P} \sum_{i=1}^{L} G_{k,i}.G_{k,i}^+$$

   are formed
   in which the $j^{th}$ mobile is the useful mobile
   in which $G_{k,i}$ is the column vector $[g_{k,1,i}, ...., g_{k,N,i}]^T$ and
   in which $(.)^T$ denotes the transpose matrix;
   (d13) the mean of this spatial correlation matrices is taken over a predetermined number of frames of the signal;
   (d14) for m varying from 1 to N, the variance $\sigma_{l,m}^2$ of the background noise on the $m^{th}$ element is estimated;
   (d15) the mean matrix obtained in step (d13) is added to a diagonal matrix in which, for m varying from 1 to N, the term located on the $m^{th}$ row and in the $m^{th}$ column is the variance of $\sigma_{l,m}^2$, the sum matrix obtained constituting the matrix $\tilde{R}_{vv}^{f1}$.

10. Method according to claim 2, in which the matrix $\tilde{R}_{vv}^{f1}$ is established on the basis of the contributions of the interference sources and the background noise on the various elements of the antenna, wherein, in order to estimate the matrix $\tilde{R}_{vv}^{f1}$,
    (d11) with the aid of a learning sequence of $L_{ref}$ samples, for m varying from 1 to N, the impulse response of the propagation channel connecting the mobile to the $m^{th}$ element of the antenna is estimated in terms of the least squares approximation, the residue $b_m$ of this estimation being a column vector of the interference sources and the background noise on the $m^{th}$ element;
    (d12) the matrix B having the N vectors $b_m^T$ as rows is formed;
    (d13) the expression $(1/L_B).B.B^+$ is calculated, in which $L_B$ denotes the number of columns of the matrix B, the matrix obtained constituting the matrix $\tilde{R}_{vv}{}^n$.

11. Method according to claim 2, in which the matrix $\tilde{R}_{vv}{}^n$ is established on the basis of the useful signal received by the various elements of the antenna, wherein, in order to estimate the matrix $\tilde{R}_{vv}{}^n$,

(d11) the impulse $\{g_{m,l},\ ...g_{m,L}\}$, in which L is an integer, of the propagation channel connecting the mobile to the $m^{th}$ element of the antenna is determined for m varying from 1 to N;

(d12) spatial correlation matrices having N rows and N columns

$$\sum_{i=1}^{L} G_i.G_i{}^{+}$$

are formed

in which $G_i$ is the column vector $[g_{l,i},\ ...,\ g_{N,i}]^T$ ;

(d13) the mean of these spatial correlation matrices is taken over a predetermined number of frames of the signal, the matrix obtained constituting the matrix $\tilde{R}_{vv}{}^n$.

12. Method according to claim 2, in which the matrix $\tilde{R}_{vv}{}^n$ is established on the basis of the useful signal received by the various elements of the antenna, wherein, in order to estimate the matrix $\tilde{R}_{vv}{}^n$,

(d11) with the aid of a learning sequence of $L_{ref}$ samples, for m varying from 1 to N, the impulse response $\{g_{m,l},\ ...g_{m,L}\}$, in which L is an integer, of the propagation channel connecting the mobile to the $m^{th}$ element of the antenna is estimated in terms of the least squares approximation;

(d12) spatial correlation matrices having N rows and N columns

$$\sum_{i=1}^{L} G_i.G_i{}^{+}$$

are formed

in which $G_i$ is the column vector $[g_{l,i},\ ...,\ g_{N,i}]^T$;

(d13) the mean of these spatial correlation matrices is taken over a predetermined number of frames of the signal, the matrix obtained constituting the matrix $\tilde{R}_{vv}{}^n$.

13. Method for transmitting a digital signal composed of successive frames of samples, by a base station equipped with a multi-element antenna to a specific mobile, in the presence of interference sources and background noise, with the aid of at least one reception carrier frequency and at least one reception carrier frequency, according to which:

- prior to sending:

(a) for each reception carrier frequency, a reception calibration table is developed, representing the variation in contribution, as a function of the reception direction, of the various reception elements at the said reception carrier frequency;

(b) for each transmission carrier frequency, a transmission calibration table is developed, representing the variation in contribution, as a function of the transmission direction, of the various transmission elements at the said transmission carrier frequency;

(c) at least one frequency transposition operator is calculated which approximately transforms one said reception calibration table into one said transmission calibration table;

- then, during sending:

(d) statistical data are calculated on the basis of a plurality of samples of a plurality of frames of the signals received by the various elements, originating from the mobile and the interference sources;

(e) for the said mobile, an optimum set of weightings is calculated on the basis of the said statistical data, the said frequency transposition operator or operators, and a criterion for reinforcing the useful signal and reducing the interference sources;

(f) the contributions to the said digital signal to be transmitted by each element are respectively weighted by the weighting obtained on the basis of the spatial weightings of the said optimum set; and

(g) the said digital signal thus weighted is transmitted,

the method employing a plurality of reception carrier frequencies $f_{qr}$ and a plurality of transmission carrier frequencies $f_{qe}$, each frame of the said digital signal being sent with the aid of a different carrier frequency, subject to a periodic repetition, so that, at step a) :

(a1) furthermore, for an arbitrarily chosen reception carrier frequency $f_{q0r}$ a reception calibration table $C_{q0r}$ is developed, representing the variation in contribution, as a function of the reception direction, of the various reception elements at the said reception carrier frequency $f_{q0r}$ ;

and at step c):

(c1) for each said reception carrier frequency $f_{qr}$, a frequency transposition matrix operator $T_{fqr.fq0r}$ is calculated which transforms the reception calibration table $C_{qr}$ associated with the frequency $f_{qr}$ into the reception calibration table $C_{q0r}$ associated with the said frequency $f_{q0r}$ ;

(c2) for each said transmission carrier frequency $f_{qe}$, a frequency transposition matrix operator $T_{fq0r.fqe}$ is calculated which transforms the calibration table $C_{q0r}$ associated with the said frequency $f_{q0r}$ into the calibration table $C_{qe}$ associated with the frequency $f_{qe}$.

**14.** Method according to claim 13, wherein:

(d1) for each frame of a set of K, not necessarily consecutive, frames received by the antenna, K being small enough for the angles of arrival, on the various elements of the antenna, of the multiple paths originating from the mobiles to be stable:

-    a matrix $\tilde{R}_{xx}{}^{fqr} = X_{fqr}(t).X_{fqr}{}^{+}(t)$ is calculated,

in which $X_{fqr}(t)$ is a vector having N components in which the $m^{th}$ component represents, at the carrier frequency $f_{qr}$, the signal received at time t from the mobile by the $m^{th}$ element of the antenna, for m varying from 1 to N, and

in which t describes a set of samples of the said frame, and

-    a matrix $\tilde{R}_{vv}{}^{fqr}$ is estimated, either on the basis of the contributions of the interference sources and the background noise on each of the N elements of the antenna, or on the basis of the useful signal received by these elements;

then

-    the mean of the said K matrices $\tilde{R}_{xx}{}^{fqr}$ is calculated so as to obtain an autocorrelation matrix $R_{xx}{}^{fqr}$ which is an estimate of $E(X_{fqr}(t).X_{fqr}{}^{+}(t))$, and

-    the mean of the said K matrices $\tilde{R}_{vv}{}^{fqr}$ is calculated so as to obtain an autocorrelation matrix $R_{vv}{}^{fqr}$ which is an estimate of $E(V_{fqr}(t).V_{fqr}{}^{+}(t))$ , in which $V_{fqr}(t)$ is a vector having N components in which the $m^{th}$ component represents, at the carrier frequency $f_{qr}$, either the contribution of the interference sources and the background noise on the $m^{th}$ element of the antenna, or the useful signal received by this element, for m varying from 1 to N.

**15.** Method according to claim 14 in the presence of P mobiles containing a useful mobile with which communication is to be established, the other P-1 other mobiles constituting the interference sources, in which the matrix $\tilde{R}_{vv}{}^{fqr}$ is established on the basis of the contributions of the interference sources and the background noise on the various elements of the antenna, wherein, in order to estimate the matrix $\tilde{R}_{vv}{}^{fqr}$,

(d11) the impulse response $\{g_{k,m,l},..., g_{k,m,L}\}$, in which L is an integer, of the propagation channel connecting the $k^{th}$ mobile to the $m^{th}$ element of the antenna, is determined for k varying from 1 to P and m varying from 1 to N;

(d12) spatial correlation matrices having N rows and N columns

$$\sum_{\substack{k=1 \\ k \neq j}}^{P} \sum_{i=1}^{L} G_{k,i}.G_{k,i}{}^{+}$$

are formed

in which the $j^{th}$ mobile is the useful mobile,

in which $G_{k,i}$ is the column vector $[g_{k,l,i}, ..., g_{k,N,i}]^T$ and

in which $(.)^T$ denotes the transpose matrix;

(d13) the mean of these spatial correlation matrices is taken over a predetermined number of frames of the signal;

(d14) for m varying from 1 to N, the variance $\sigma_{I,m}^2$ of the background noise on the $m^{th}$ element is estimated;

(d15) the mean matrix obtained in step (d13) is added to a diagonal matrix in which, for m varying from 1 to N, the term located on the $m^{th}$ row and in the $m^{th}$ column is the variance $\sigma_{I,m}^2$, the sum matrix obtained constituting the matrix $\widetilde{R}_{vv}^{fqr}$.

**16.** Method according to claim 14, in which the matrix $R_{vv}^{fqr}$ is established on the basis of the contributions of the interference sources and the background noise on the various elements of the antenna, wherein, in order to estimate the matrix $\widetilde{R}_{vv}^{fqr}$,

(d11) with the aid of a learning sequence of $L_{ref}$ samples, for m varying from 1 to N,

the impulse response of the propagation channel connecting the mobile to the $m^{th}$ element of the antenna is estimated in terms of the least squares approximation, the residue $b_m$ of this estimation being a column vector constituting an estimate of the contribution of the interference sources and the background noise on the $m^{th}$ element;

(d12) the matrix B having the N vectors $b_m^T$ as rows is formed;

(d13) the expression $(1/L_B).B.B^+$ is calculated, in which $L_B$ denotes the number of columns of the matrix B, the matrix obtained constituting the matrix $\widetilde{R}_{vv}^{fqr}$.

**17.** Method according to claim 14, in which the matrix $\widetilde{R}_{vv}^{fqr}$ is established on the basis of the useful signal received by the various elements of the antenna, wherein, in order to estimate the matrix $\widetilde{R}_{vv}^{fqr}$,

(d11) the impulse response $\{g_{m,l,...,} g_{m,L}\}$, in which L is an integer, of the propagation channel connecting the mobile to $m^{th}$ element of the antenna is determined for m varying from 1 to N;

(d12) spatial correlation matrices having N rows and N columns

$$\sum_{i=1}^{L} G_i.G_i^+$$

are formed

in which $G_i$ is the column vector $[g_{l,i}, ..., g_{N,i}]^T$;

(d13) the mean of this spatial correlation matrices is taken over a predetermined number of frames of the signal, the matrix obtained constituting the matrix $\widetilde{R}_{vv}^{fqr}$.

**18.** Method according to claim 14, in which the matrix $\widetilde{R}_{vv}^{fqr}$ is established on the basis of the useful signal received by the various elements of the antenna, wherein, in order to estimate the matrix $\widetilde{R}_{vv}^{fqr}$,

(d11) with the aid of a learning sequence $L_{ref}$ samples, for m varying from 1 to N, the impulse response $\{g_{m,l}, ...g_{m,L}\}$, in which L is an integer, of the propagation channel connecting the mobile to the $m^{th}$ element of the antenna is estimated in terms of the least squares approximation;

(d12) spatial correlation matrices having N rows and N columns

$$\sum_{i=1}^{L} G_i.G_i^+$$

are formed

in which $G_i$ is the column vector $[g_{l,i}, ..., g_{N,i}]^T$;

(d13) the mean of these spatial correlation matrices is taken over a predetermined number of frames of the signal, the matrix obtained constituting the matrix $\widetilde{R}_{vv}^{fqr}$.

**19.** Method according to claim 14, wherein

(e1) for the said reception carrier frequency $f_{q0r}$, a spatial weighting vector $w_{fq0r}$ is calculated so that the matrices $R_{xx}^{fq0r}$, $R_{vv}^{fq0r}$ and the vector $w_{fq0r}$ satisfy a suitable criterion for reinforcing the useful signal and reducing the interference sources;

(e2) for each transmission carrier frequency $f_{qe}$, the inverse, denoted $T_{fq0r,fqe}^{-1}$, of the frequency transposition operator is applied to the weighting vector $w_{fq0r}$, so as to obtain the said optimum set of spatial weightings in the form of a vector $w_{fqe} = T_{fq0r,fqe}^{-1}.w_{fq0r}$ ;

(f1) for m varying from 1 to N, the signal to be transmitted at the transmission carrier frequency $f_{qe}$ by the $m^{th}$ element of the antenna to the mobile is multiplied by the $m^{th}$ component of the conjugate transposed optimum weighting vector $w_{qe}^{+}$.

20. Method according to claim 19, in which the autocorrelation matrix $R_{vv}^{fqr}$ is established on the basis of the contributions of the interference sources and the background noise on the various elements of the antenna, wherein

(e11) the said criterion consists in choosing for the optimum weighting vector $w_{fq0r}$ the vector $w_{fq0r}$ which minimizes the ratio $(w_{fq0r}^{+}.R_{vv}^{fq0r}.w_{fq0r}) / (w_{fq0r}^{+}.R_{xx}^{fq0r}.w_{fq0r})$.

21. Method according to claim 19, in which the autocorrelation matrix $R_{vv}^{fqr}$ is established on the basis of the useful signal received by the various elements of the antenna, wherein

(e11) the said criterion consists in choosing for the optimum weighting vector $w_{fq0r}$ the vector $w_{fq0r}$ which maximizes the ratio $(w_{fq0r}^{+}.R_{vv}^{fq0r}.w_{fq0r}) / (w_{fq0r}^{+}.R^{fq0r}.w_{fq0r})$.

22. Method according to claim 14, in which

(e1) the K corresponding frequency transposition operators $T_{fqr,fq0r}$ are applied respectively to the said K matrices $\tilde{R}_{xx}^{fqr}$ so as to obtain K matrices $\tilde{R}_{xx}^{fq0r} = T_{fqr,fq0r}. \tilde{R}_{xx}^{fqr} .T_{fqr,fq0r}^{+}$;

(e2) the K corresponding frequency transposition operators $T_{fqr,fq0r}$ are applied respectively to the said K matrices $\tilde{R}_{vv}^{fqr}$ so as to obtain K matrices $\tilde{R}_{vv}^{fq0r} = T_{fqr,fq0r}. \tilde{R}_{vv}^{fqr} .T_{fqr,fq0r}^{+}$;

(e3) the mean $R_{xx}^{fq0r}$ of the said K matrices $\tilde{R}_{xx}^{fqr}$ and the mean $R_{vv}^{fq0r}$ of the said K matrices $\tilde{R}_{vv}^{fq0r}$ are calculated;

(e4) for each transmission carrier frequency $f_{qe}$, the frequency transposition operator $T_{fq0r,fqe}$ is applied to the mean matrix $R_{xx}^{fq0r}$, so as to obtain a matrix $R_{xx}^{fqe} = T_{fq0r,fqe} \cdot R_{xx}^{fq0r}.T_{fq0r,fqe}^{+}$ ;

(e5) for each transmission carrier frequency $f_{qe}$, the frequency transposition operator $T_{fq0r,fqe}$ is applied to the mean matrix $R_{vv}^{fq0r}$, so as to obtain a matrix $R_{vv}^{fqe} = T_{fq0r,fqe} \cdot R_{vv}^{fq0r} .T_{fq0r,fqe}^{+}$ ;

(e6) for each transmission carrier frequency $f_{qe}$, the said optimum set of spatial weightings is calculated in the form of a vector $W_{fqe}$ so that the matrices $R_{xx}^{fqe}$, $R_{vv}^{fqe}$ and the vector $W_{fqe}$ satisfy a suitable criterion for reinforcing the useful signal and reducing the interference sources;

(f1) for m varying from 1 to N, the signal to be transmitted at the transmission carrier frequency $f_{qe}$ by the $m^{th}$ element of the antenna to the mobile is multiplied by the $m^{th}$ component of the conjugate transposed optimum weighting vector $W_{fqe}^{+}$.

23. Method according to claim 22, in which the autocorrelation matrix $R_{vv}^{fqr}$ is established on the basis of the contributions of the interference sources and the background noise on the various elements of the antenna, wherein

(e61) the said criterion consists in choosing for the optimum weighting vector $w_{fqe}$ the vector $w_{fqe}$ which minimizes the ratio $(w_{fqe}^{+}.R_{vv}^{fqe}.w_{fqe}) / (w_{fqe}^{+}.R_{xx}^{fqe}.w_{fqe})$.

24. Method according to claim 22, in which the autocorrelation matrix $R_{vv}^{fqr}$ is established on the basis of the useful signal received by the various elements of the antenna, **characterized in that**

(e61) the said criterion consists in choosing for the optimum weighting vector $w_{fqe}$ the vector $w_{fqe}$ which maximizes the ratio $(w_{fqe}^{+}.R_{vv}^{fqe}.w_{fqe}) / (w_{fqe}^{+}.R_{xx}^{fqe}.w_{fqe})$.

25. Method according to claim 1 or 13, wherein, in order to develop each said reception calibration table,

(a1) a matrix is formed in which each column is a directional vector in which the $m^{th}$ component represents the signal which would be received by the $m^{th}$ element, m varying from 1 to N in which N is the number of elements, in the case of receiving a plane wave of frequency equal to the said carrier frequency and originating from a direction defined by a predetermined angle intrinsic to the said directional vector.

26. Method according to claims 1, 13 or 25, wherein, in order to develop each said transmission calibration table,

(b1) a matrix is formed in which each column is a directional vector in which the $m^{th}$ component represents the signal which would be transmitted by the $m^{th}$ element, m varying from 1 to N in which N is the number of elements, in the case of transmitting a plane wave of frequency equal to the said carrier frequency in a direction defined by a predetermined angle intrinsic to the said directional vector.

27. Method according to claims 1, 13, 25 or 26, wherein
    (c1) the said operator performs an approximate transformation of the least squares approximation type.

28. Method according to claims 1, 13, 25, 26 or 27, wherein
    (d1) the said statistical data are calculated with an order of at least 2.

AVANT TRANSMISSION

PENDANT TRANSMISSION

```
┌─────────────────┐              ┌─────────────────────┐
│   TABLES  DE    │              │ DONNÉES STATISTIQUES│
│   CALIBRATION   │              │   EN RÉCEPTION      │
└─────────────────┘              └─────────────────────┘
         │                                  │
         ▼                                  │
┌─────────────────┐                         │
│   OPÉRATEURS    │                         │
│ DE TRANSPOSITION│                         │        CRITÈRE.
│  EN FRÉQUENCE   │                         │              │
└─────────────────┘                         │              │
         │                                  │              │
         ▼                                  ▼              │
┌────────────────────────────────────────────────────┐◄───┘
│   JEU OPTIMAL DE PONDÉRATIONS SPATIALES            │
└────────────────────────────────────────────────────┘
                      │
                      ▼
          ┌─────────────────────┐
          │    PONDÉRATION      │
          │    DU SIGNAL        │
          │    A ÉMETTRE        │
          └─────────────────────┘
                      │
                      ▼
          ┌─────────────────────┐
          │     ÉMISSION        │
          │    DU SIGNAL        │
          │    PONDÉRÉ          │
          └─────────────────────┘
```